(19) **Europäisches Patentamt**
**European Patent Office**
**Office européen des brevets**

(11) **EP 1 759 764 B1**

(12) **EUROPEAN PATENT SPECIFICATION**

(45) Date of publication and mention
of the grant of the patent:
**26.09.2012 Bulletin 2012/39**

(51) Int Cl.:
*B01J 23/78* (2006.01)     *B01J 23/84* (2006.01)
*B01J 23/89* (2006.01)     *B01J 23/755* (2006.01)
*B01J 23/02* (2006.01)     *B01J 23/70* (2006.01)
*B01J 21/00* (2006.01)     *B01J 8/00* (2006.01)
*C10G 11/02* (2006.01)     *C01B 3/26* (2006.01)

(21) Application number: **06254188.3**

(22) Date of filing: **09.08.2006**

(54) **Catalyst comprising silicon, magnesium, aluminum and metallic Nickel nanoparticles and its use in a method for decomposing C2 hydrocarbons.**

Katalysator enhaltend Silizium, Magnesium, Aluminium und Nanopartikel aus Nickel und dessen Verwendung in einer Methode zur Zersetzung von C2-Kohlenwasserstoffen.

Catalysateur contenant du silicium, du magnesium, de l'aluminium et des nanoparticules de Nickel et son utilisation dans une méthode pour la décomposition de C2-hydrocarbures.

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.08.2005   JP 2005232810**
**23.05.2006   JP 2006143413**
**13.06.2006   JP 2006163912**

(43) Date of publication of application:
**07.03.2007   Bulletin 2007/10**

(73) Proprietor: **Toda Kogyo Corporation**
**Hiroshima-ken (JP)**

(72) Inventors:
• **Kobayashi, Naoya,**
**Toda Kogyo Corp.**
**Otake-shi**
**Hiroshima-ken (JP)**

• **Takahashi, Shinji,**
**Toda Kogyo Corp.**
**Otake-shi**
**Hiroshima-ken (JP)**

(74) Representative: **Woods, Geoffrey Corlett**
**J A Kemp**
**14 South Square**
**Gray's Inn**
**London WC1R 5JJ (GB)**

(56) References cited:
**EP-A- 1 484 108      WO-A-2004/035204**
**DE-A1- 1 812 460    GB-A- 1 032 754**
**GB-A- 1 108 934**

**Description**

BACKGROUND OF THE INVENTION :

The present invention relates to a hydrocarbon-decomposing catalyst, and a method for decomposing hydrocarbons using the catalyst. More particularly, the present invention relates to a hydrocarbon-decomposing catalyst which is less expensive, and can exhibit an excellent catalytic activity capable of decomposing hydrocarbons, in particular, not only $C_1$ hydrocarbon but also $C_2$ or more hydrocarbons, a good anti-coking property even under a less steam condition, a sufficient strength capable of preventing the catalyst from being crushed and broken even upon occurrence of coking inside thereof, and an excellent durability; a method for decomposing hydrocarbons using the catalyst. WO-A-2004/035 204 discloses a catalyst containing Nickel, Silica, alumine and Magnesium for hydrogenation reactions.

In recent years, in the consideration of global environmental problems, early utilization techniques for new energies have been intensively studied, and fuel cells have been noticed as one of these techniques. In the fuel cells, hydrogen and oxygen are electrochemically reacted with each other to convert a chemical energy into an electric energy. Thus, the fuel cells have characteristics such as a high energy utilization efficiency, and therefore, have been positively studied for practical applications to civil life, industries or automobiles. The fuel cells are generally classified into a phosphoric acid type (PAFC), a molten carbonate type (MCFC), a solid oxide type (SOFC), a solid polymer type (PEFC), etc., according to kinds of electrolytes used therein.

Various methods have been conventionally proposed to produce hydrogen as a raw material for the fuel cells. For example, there has been proposed a method of reforming hydrocarbon-containing fuels such as city gas 13A, LPG, kerosene, gasoline and naphtha to obtain a reformed gas containing hydrogen as a main component. As the method for obtaining the above reformed gas, there are known various reforming techniques such as an SR (steam reforming) method, a POX (partial oxidation) method and an SR + POX (autothermal) method. Among these reforming techniques, application of the SR method to cogeneration has been most noticed, since the SR method enables production of a reformed gas having a high hydrogen concentration.

The steam reforming (SR) is conducted according to the following reaction formula:

$$C_nH_{2n+2} + nH_2O \rightarrow nCO + (2n+1)H_2$$

$$CO + H_2O \rightarrow CO_2 + H_2$$

The above reaction is conducted at a temperature of 600 to 800°C and a S/C ratio (steam/carbon ratio) of about 2.0 to 3.5. In addition, the reaction is an endothermic reaction, and therefore, the reaction can be more accelerated as the reaction temperature is increased.

In general, in the fuel cell system, after a substantially whole amount of sulfur contained in the fuel is removed using a desulfurizer, the thus desulfurized hydrocarbon is decomposed to obtain a reformed gas containing hydrogen as a main component. The thus obtained reformed gas (hydrogen gas) is introduced into a fuel cell stack where the hydrogen is electrochemically reacted with oxygen to generate an electric energy. In such a method, a reforming catalyst is used to reform the hydrocarbons. However, the reforming catalyst tends to undergo deterioration in catalyst performance during the operation for a long period of time. In particular, the reforming catalyst tends to be poisoned with a trace amount of sulfur slipped over the desulfurizer, resulting in problems such as significant deterioration in catalytic activity thereof. In addition, when $C_2$ or more hydrocarbons are used as a fuel for the steam reforming, the hydrocarbons in the fuel tend to suffer from thermal decomposition, resulting in precipitation of carbon, production of polycondensates and deterioration in performance of the reforming catalyst.

Also, among these fuel cell systems, the reforming catalysts for the phosphoric acid-type fuel cells (PAFC) and the solid polymer-type fuel cells (PEFC) are generally used in the form of a molded product such as beads. In this case, if the beads-shaped catalysts suffer from coking inside thereof, the catalysts tend to be broken and crushed, resulting in clogging of a reaction tube therewith.

In the case of the solid oxide-type fuel cells (SOFC), the hydrocarbons are generally reformed on a fuel electrode. However, when the fuel used contains $C_2$ or more hydrocarbons, carbon tends to be produced in conduits or fuel electrode. As a result, the electrochemical reaction tends to be inhibited by the thus produced carbon, resulting in deterioration in cell performance.

The fuels such as city gas, LPG, kerosene, gasoline and naphtha contain not only $C_1$ but also $C_2$ or more hydrocarbons. For example, the city gas 13A is composed of 88.5% of methane, 4.6% of ethane, 5.4% of propane and 1.5% of butane, i.e., contains, in addition to methane as a main component thereof, hydrocarbons having 2 to 4 carbon atoms in an amount as large as 11.5%. These $C_2$ or more hydrocarbons tend to be readily thermally decomposed to cause precipitation of carbon. For this reason, in order to use the $C_2$ or more hydrocarbons as a fuel for the fuel cells, it is required to decompose and remove the $C_2$ or more hydrocarbons before conducting the steam reforming, so that hydrogen can efficiently produced, and the reforming catalyst can be prevented from suffering from deterioration in catalytic activity.

At present, as an active metal for the steam reforming catalysts, there may be used base metals such as Ni, Co and Fe, and noble metals such as Pt, Rh, Ru, Ir and Pd. Among these metals, in the consideration of high catalytic activity, there have been mainly used catalysts carrying a metal element such as Ni and Ru.

However, since Ni as a base metal tends to relatively readily cause precipitation of carbon, it is required to use the Ni-containing catalyst under a high steam/carbon ratio condition in which steam is added in an excess amount as compared to the theoretical composition ratio, so that the operation procedure tends to become complicated, and the unit requirement of steam tends to be increased, resulting in uneconomical methods. Further, since the conditions for continuous operation of the system are narrowed, in order to complete the continuous operation of the system using the Ni-containing catalyst, not only an expensive control system but also a very complicated system as a whole are required. As a result, the production costs and maintenance costs tend to be increased, resulting in uneconomical process.

On the other hand, the noble metals such as Ru tend to hardly undergo precipitation of carbon even under a low steam/carbon ratio condition. However, the noble metals tend to be readily poisoned with sulfur contained in the raw materials, and deteriorated in catalytic activity for a short period of time. Further, precipitation of carbon tends to be extremely readily caused on the sulfur-poisoned catalysts. Therefore, even in the case where the noble metals are used, there also tends to arise such a problem that precipitation of carbon is induced by the poisoning with sulfur. In addition, since the noble metals are expensive, the fuel cell systems using the noble metals tend to become very expensive, thereby preventing further spread of such fuel cell systems.

For the above-mentioned reasons, in the system for decomposing hydrocarbons by adding steam to the raw materials containing desulfurized $C_1$ or more hydrocarbons, it has been demanded to provide such a system in which the decomposition reaction is separated into a front stage (low-temperature decomposition step) and a rear stage (high-temperature decomposition step), such that $C_2$ or more hydrocarbons are mainly decomposed in a front stage (low-temperature decomposition step) reactor filled with a hydrocarbon-decomposing catalyst, and the hydrocarbons mainly composed of $C_1$ hydrocarbon which are obtained in the front stage are further decomposed in a rear stage (high-temperature decomposition step) reactor. Further, it has been demanded to provide such a hydrocarbon-decomposing catalyst which is less expensive and from the functional viewpoints, can exhibit an excellent catalytic activity capable of decomposing $C_1$ or more hydrocarbons, a good anti-coking property even under a less steam condition, a sufficient strength capable of preventing the catalyst from being crushed or broken even upon occurrence of coking inside thereof, and an excellent durability.

The city gas, LPG, etc., used as the raw material in the hydrocarbon decomposition reaction in which the raw hydrocarbon is mixed and reacted with steam, contain nitrogen compounds although the content thereof varies depending upon kind thereof and is merely small. Therefore, there tends to arise such a problem that the nitrogen is reacted with hydrogen produced by the steam reforming reaction on the catalyst containing an active metal such as Ni, Fe and Ru to by-produce ammonia ($N_2 + 3H_2 \rightarrow 2NH_3$). When the reformed gas containing ammonia is fed to the fuel cell stack, a platinum metal catalyst used as an electrode tends to be poisoned therewith, so that the fuel cell is deteriorated in power generation performance, resulting in deactivation of the catalyst in the worst case.

Conventionally, there have been reported hydrocarbon-decomposing catalysts formed by carrying (supporting) a catalytically active metal such as platinum, palladium, rhodium, ruthenium and nickel on a carrier composed of α-alumina, magnesium oxide or titanium oxide (Japanese Patent Application Laid-open (KOKAI) No. 2001-146406 and Japanese Patent Application Laid-open (KOHYO) No. 2000-503624). Also, as a precursor of the hydrocarbon-decomposing catalyst, there are known catalysts using a hydrotalcite compound containing Ni (Japanese Patent Application Laid-open (KOKAI) Nos. 2003-135967 and 6-015172(1994)).

In Japanese Patent Application Laid-open (KOKAI) No. 2001-146406, it is described that a catalyst formed by carrying (supporting) Ru as an active metal on a carrier composed of α-alumina is used when producing hydrogen from fuels containing $C_2$ or more hydrocarbons such as kerosene by steam reforming. However, the Ru-based catalyst tends to be sulfurized by sulfur contained in the fuels and suffer from accelerated coking due to the sulfurization, thereby causing such a problem that the Ru-based catalyst is deactivated.

In Japanese Patent Application Laid-open (KOHYO) No. 2000-503624, there is described the catalyst formed by adding Cu to a steam reforming catalyst containing nickel as an active metal in order to prevent production of ammonia. However, the steam reforming catalyst has such a problem that the catalyst performance thereof tends to be deteriorated by adding Cu thereto.

In Japanese Patent Application Laid-open (KOKAI) Nos. 2003-135967 and 6-015172(1994), there are described the hydrocarbon-decomposing catalysts produced from the Ni-containing hydrotalcite compound as a precursor. However, in the inventions described in these Japanese Patent Applications, a strength of these catalysts themselves has not been considered at all.

As a result of the present inventors' earnest study for solving the above problems, it has been found that a catalyst formed by containing and/or carrying (supporting) a specific amount of fine metallic nickel particles on a porous carrier composed of a specific composite oxide containing a specific amount of silicon, can exhibit an excellent catalytic activity capable of decomposing hydrocarbons, in particular, $C_1$ or more hydrocarbons, and a good anti-coking property even under a less steam condition, and can maintain a sufficient strength capable of preventing the catalyst from being crushed and broken even upon occurrence of coking inside thereof. The present invention has been attained on the basis of the above finding.

SUMMARY OF THE INVENTION

An object of the present invention is to provide a hydrocarbon-decomposing catalyst which is less expensive, and can exhibit an excellent catalytic activity capable of decomposing and removing hydrocarbons, in particular, not only $C_1$ hydrocarbon but also $C_2$ or more hydrocarbons, a good anti-coking property even under a less steam condition, a sufficient strength capable of preventing the catalyst from being crushed and broken even upon occurrence of coking inside thereof, and an excellent durability.

Another object of the present invention is to provide a hydrocarbon-decomposing catalyst capable of reducing an amount of ammonia by-produced by the reaction between nitrogen compounds contained in a trace amount in a hydrocarbon raw material and hydrogen produced after the hydrocarbon decomposition reaction in which the hydrocarbon is mixed and reacted with steam.

The other object of the present invention is to provide a method for effectively decomposing hydrocarbons by using the above hydrocarbon-decomposing catalyst.

To accomplish the aims, in a first aspect of the present invention, there is provided a hydrocarbon-decomposing catalyst comprising magnesium, aluminum and nickel as constitutional elements, and silicon contained therein, wherein a content of said nickel is 0.1 to 40% by weigh (calculated as metallic nickel) based on the weight of the catalyst, and a content of the said silicon is 0.001 to 20% by weight (calculated as Si) based on the weight of the catalyst and the nickel is present as fine metallic nickel particles having an average particle diameter of 1 to 20 nm.

In a second aspect of the present invention, there is provided a hydrocarbon-decomposing catalyst according to the first aspect comprising a porous carrier and a catalytically active metal carried (supported) on the carrier, wherein the said porous carrier comprises magnesium and aluminum as constitutional elements and also contains silicon in an amount of 0.001 to 20% by weight (calculated as Si) based on the weight of the catalyst, and the said catalytically active metal comprises fine metallic nickel particles having an average particle diameter of 1 to 20 nm in an amount of 0.1 to 40% by weight (calculated as metallic nickel) based on the weight of the catalyst.

In a third aspect of the present invention, there is provided a hydrocarbon-decomposing catalyst according to any one of the preceding aspects, wherein said catalyst further contains fine particles carried (supported) thereon, which comprise at least one element selected from the group consisting of gold, silver, platinum, palladium, rhodium, iridium, rhenium, ruthenium, copper, iron, cobalt, manganese, chromium, vanadium and titanium.

In a fourth aspect of the present invention, there is provided a hydrocarbon-decomposing catalyst according to the third aspect, wherein said fine particles comprising at least one element selected from the group consisting of gold, silver, platinum, palladium, rhodium, iridium, rhenium, ruthenium, copper, iron, cobalt, manganese, chromium, vanadium and titanium, have an average particle diameter of 0.5 to 50 nm, and a content of said at least one element selected from the group consisting of gold, silver, platinum, palladium, rhodium, iridium, rhenium, ruthenium, copper, iron, cobalt, manganese, chromium, vanadium and titanium is 0.025 to 10% by weight, calculated as each metal element, based on the weight of the metallic nickel contained in the catalyst.

In a fifth aspect of the present invention, there is provided a method for decomposing hydrocarbons by adding steam to a hydrocarbon-containing gas, comprising:

contacting the hydrocarbon-containing gas and the steam with the hydrocarbon-decomposing catalyst as described in any one of the above first to fourth aspects at a temperature of 250 to 850°C under such a condition in which a molar ratio of steam to carbon (S/C ratio) is 1.0 to 6.0.

In a sixth aspect of the present invention, there is provided a method for decomposing hydrocarbons according to the fifth aspect wherein steam is added to a gas containing desulfurized $C_1$ or more hydrocarbons, which method further comprises:

a low-temperature decomposition step of decomposing mainly $C_2$ or more hydrocarbons contained in the hydrocarbon containing gas to obtain a gas containing a $C_1$ hydrocarbon as a main component; and
a high-temperature decomposition step of decomposing the $C_1$ hydrocarbon contained as a main component in the hydrocarbon-containing gas obtained in the low-temperature decomposition step,
wherein in the low-temperature decomposition step, the high-temperature decomposition step or both of the low-temperature decomposition step and the high-temperature decomposition step, the hydrocarbon-containing gas and the steam are contacted with the hydrocarbon-decomposing catalyst as described in any one of the above first to fourth aspects.

DETAILED DESCRIPTION OF THE INVENTION

The present invention is described in detail below.

First, the hydrocarbon-decomposing catalyst of the present invention is described.

The hydrocarbon-decomposing catalyst of the present invention contains magnesium, aluminum and nickel as constitutional elements, and also contains silicon, wherein the content of the nickel in the catalyst is 0.1 to 40% by weight (calculated as metallic nickel) based on the weight of the catalyst, and the content of the silicon is 0.001 to 20% by weight (calculated as Si) based on the weight of the catalyst.

According to the preferred embodiment of the present invention, the hydrocarbon-decomposing catalyst comprises a porous carrier and a catalytically active metal carried (supported) on the porous carrier, wherein the porous carrier contains magnesium and aluminum as constitutional elements, and also contains silicon in an amount of 0.001 to 20% by weight (calculated as Si) based on the weight of the catalyst, and the catalytically active metal comprises fine metallic nickel particles in an amount of 0.1 to 40% by weight (calculated as metallic nickel) based on the weight of the catalyst.

As to the ratio between magnesium element and aluminum element contained in the hydrocarbon-decomposing catalyst of the present invention, it is preferred that the amount of magnesium used is larger than that of aluminum. For example, the molar ratio of magnesium to aluminum (Mg:Al) is usually 4:1 to 1.5:1, preferably 2.5:1 to 1.6:1. When the magnesium content is more than the above-specified range, it may be difficult to form the catalyst into a molded product having a sufficient strength. On the other hand, when the magnesium content is less than the above-specified range, the resultant carrier may fail to exhibit properties required as a porous carrier.

The metallic nickel is contained in and/or carried on the porous carrier comprising the silicon-containing composite oxide of magnesium and aluminum.

The content of the metallic nickel in the catalyst is usually 0.10 to 40% by weight, preferably 0.18 to 38% by weight based on the weight of the catalyst. When the content of the metallic nickel in the catalyst is less than 0.10% by weight, the conversion (decomposition percentage) of the hydrocarbons tends to be lowered. When the content of the metallic nickel in the catalyst is more than 40% by weight, the fine metallic nickel particles tend to have a particle size of more than 20 nm, resulting in deterioration in anti-coking property thereof.

Further, the molar ratio of the metallic nickel to whole metals including magnesium, aluminum, nickel, silicon, etc., (Ni/whole metal ions) in the catalyst is usually 0.0007 to 0.342, preferably 0.001 to 0.34, more preferably 0.0015 to 0.34. When the molar ratio of the metallic nickel to whole metals is more than 0.342, the average particle diameter of the fine metallic nickel particles tends to exceed 20 nm, so that the conversion (decomposition percentage) of the hydrocarbons tends to be lowered, and the anti-coking property thereof also tends to be deteriorated.

The average particle diameter of the fine metallic nickel particles is not more than 20 nm, preferably not more than 18 nm, more preferably not more than 15 nm. Meanwhile, the lower limit of the average particle diameter of the fine metallic nickel particles is 1 nm. The catalyst containing and/or carrying (supporting) such fine metallic nickel particles having an average particle diameter of not more than 20 nm is optimum for the hydrocarbon decomposition reaction, and can exhibit an excellent catalytic activity. When the average particle diameter of the fine metallic nickel particles is more than 20 nm, the conversion (decomposition percentage) of the hydrocarbons tends to be lowered upon conducting the hydrocarbon decomposition reaction by mixing the hydrocarbon-containing fuel with steam.

In the hydrocarbon-decomposing catalyst of the present invention, it is preferred that the metallic nickel is present in the vicinity of and/or on the surface of the respective hydrocarbon-decomposing catalyst particles. More specifically, it is more preferred that the hydrocarbon-decomposing catalyst is in the form of particles in which the metallic nickel is adhered onto the surface of the porous carrier composed of a silicon-containing composite oxide of magnesium and aluminum.

Also, the hydrocarbon-decomposing catalyst of the present invention may be in the form of a molded product obtained by granulating the catalyst particles. In addition, the hydrocarbon-decomposing catalyst may have such a structure in which the metallic nickel is present in the vicinity of and/or on the surface of a molded product as the porous carrier composed of the composite oxide.

The content of silicon in the catalyst is usually 0.001 to 20% by weight, preferably 0.01 to 20% by weight, more preferably 0.05 to 18% by weight; still more preferably 0.1 to 15% by weight (calculated as Si) based on the weight of the catalyst. When the silicon content is less than 0.001% by weight, the catalyst tends to be insufficient in sintering property, thereby failing to exhibit excellent strength and durability. When the silicon content is more than 20% by weight, excessive silicon tends to be reacted with the metallic nickel, resulting in deteriorated catalytic activity of the catalyst. When the silicon content falls within the above-specified range, it is possible to obtain the catalyst having a strength as high as 15 to 60 kg as measured by the below-mentioned evaluation method, whereas the strength thereof is as low as 5 to 30 kg when no silicon is added.

As to impurities contained in the hydrocarbon-decomposing catalyst of the present invention, for example, the chlorine (Cl) content is usually not more than 500 ppm, the nitrogen (N) content is usually not more than 500 ppm, and the sulfur (S) content is usually not more than 600 ppm. In the case where the catalyst is required to show a higher catalytic activity, the chlorine (Cl) content is preferably not more than 100 ppm, more preferably not more than 95 ppm; the nitrogen (N) content is preferably not more than 100 ppm, more preferably not more than 95 ppm; and the sulfur (S) content is preferably not more than 100 ppm, more preferably not more than 20 ppm, still more preferably not more than 1 ppm, further still more preferably not more than 0.8 ppm.

The hydrocarbon-decomposing catalyst of the present invention may also contain and/or carry at least one element selected from the group consisting of gold, silver, platinum, palladium, rhodium, iridium, rhenium, ruthenium, copper, iron, cobalt, manganese, chromium, vanadium and titanium. In the preferred embodiment of the present invention, there is exemplified such a catalyst on which fine metal particles composed of at least one element selected from the group consisting of gold, silver, platinum, palladium, rhodium, iridium, rhenium, ruthenium, copper, iron, cobalt, manganese, chromium, vanadium and titanium are carried (supported).

The average particle diameter of the fine metal particles is usually not more than 50 nm, preferably not more than 35 nm, more preferably not more than 30 nm. The lower limit of the average particle diameter of the fine metal particles is usually 0.5 nm. When the average particle diameter of the fine metal particles is more than 50 nm, it may be difficult to further improve the effect of preventing generation of ammonia.

The content of at least one metal element selected from the group consisting of gold, silver, platinum, palladium, rhodium, iridium, rhenium, ruthenium, copper, iron, cobalt, manganese, chromium, vanadium and titanium, is usually 0.025 to 10% by weight, preferably 0.03 to 10% by weight (calculated as each metal element) based on the weight of the metallic nickel contained in the catalyst. When the content of the at least one metal element is less than 0.025% by weight, the metal element added may fail to exhibit a sufficient effect of preventing production of ammonia. When the content of the at least one metal element is more than 10% by weight, the average particle diameter of the fine metal particles composed of at least one element selected from the group consisting of gold, silver, platinum, palladium, rhodium, iridium, rhenium, ruthenium, copper, iron, cobalt, manganese, chromium, vanadium and titanium tends to exceed 50 nm, so that it may be difficult to enhance the effect of preventing production of ammonia.

The hydrocarbon-decomposing catalyst of the present invention has a specific surface area of usually 7 to 320 $m^2/g$, preferably 20 to 280 $m^2/g$. When the specific surface area of the hydrocarbon-decomposing catalyst is less than 7 $m^2/g$, the conversion (decomposition percentage) of hydrocarbons at a high space velocity used in the hydrocarbon decomposition reaction tends to be lowered. When the specific surface area of the hydrocarbon-decomposing catalyst is more than 320 $m^2/g$, it may be difficult to industrially mass-produce composite hydroxide particles as a precursor of the catalyst.

Next, the process for producing the hydrocarbon-decomposing catalyst according to the present invention is described.

The hydrocarbon-decomposing catalyst of the present invention may be obtained by producing composite hydroxide particles as a precursor of the catalyst, heat-calcining the thus produced composite hydroxide particles at a temperature of usually 400 to 1600°C to obtain porous oxide particles, and then heat-reducing the thus obtained porous oxide particles at a temperature of usually 700 to 110°C.

The composite hydroxide particles used in the present invention may be obtained by the following one stage reaction or two stage reaction (multi-stage reaction).

First, the one stage reaction is explained.

In the one stage reaction, the composite hydroxide particles may be obtained by (1) adding a magnesium raw material, an aqueous aluminum salt solution, a nickel raw material and a silicon raw material to an anion-containing aqueous alkali solution, (2) mixing the resultant mixture under stirring at a pH value of usually 7.0 to 13.0, (3) aging the resultant mixed solution at a temperature of usually 30 to 300°C to produce composite hydroxide particles composed of magnesium, aluminum, nickel and silicon, and (4) then subjecting the resultant composite hydroxide particles to filtration and washing.

The magnesium, aluminum, nickel and silicon salts as the raw materials are not particularly limited as long as they are in the form of a water-soluble salt.

Examples of the magnesium raw material may include magnesium oxide, magnesium hydroxide, magnesium oxalate, magnesium sulfate, magnesium sulfite, magnesium nitrate, magnesium chloride, magnesium citrate, basic magnesium carbonate and magnesium benzoate.

Examples of the aluminum raw material may include aluminum oxide, aluminum hydroxide, aluminum acetate, aluminum chloride, aluminum nitrate, aluminum oxalate and basic ammonium aluminum.

Examples of the nickel salt raw material may include nickel oxide, nickel hydroxide, nickel sulfate, nickel carbonate, nickel nitrate, nickel chloride, nickel benzoate, basic nickel carbonate, nickel formate, nickel citrate and diammonium nickel sulfate.

Examples of the silicon salt raw material may include sodium silicate.

The mixed solution has a pH value of usually 7.0 to 13.0, preferably 8.0 to 13.0. When the pH value of the mixed solution is less than 7.0, it may be difficult to produce the aimed composite hydroxide particles.

The aging of the mixed solution may be conducted at a temperature of usually 30 to 300°C, preferably 50 to 250°C. When the aging temperature of the mixed solution is less than 30°C, the specific surface area of the obtained composite hydroxide particles tends to exceed 320 $m^2/g$, so that it may be difficult to industrially produce composite hydroxide particles having such a large specific surface area. When the aging temperature of the mixed solution is more than 300°C, large aluminum hydroxide particles or large aluminum oxide particles tend to be mixed in the composite hydroxide particles, so that the catalytically active fine metal particles tend to suffer from accelerated sintering, thereby failing to obtain a catalyst having the aimed properties.

The aging time of the mixed solution is not particularly limited, but should be such a time capable of allowing a particle growth sufficient to produce composite hydroxide core particles. More specifically, the aging time of the mixed solution is usually 1 to 80 hours, preferably 1 to 24 hours and more preferably 2 to 18 hours. When the aging time is less than 1 hour, the particle growth for producing the composite hydroxide core particles tends to be insufficient. The aging time of more than 80 hours tends to be disadvantageous from the industrial viewpoint.

Next, the multi-stage reaction is explained.

In the multi-stage reaction, the composite hydroxide particles may be obtained by (1) adding a magnesium raw material and an aqueous aluminum salt solution to an anion-containing aqueous alkali solution, (2) mixing the resultant mixture under stirring at a pH value of usually 7.0 to 13.0, (3) aging the resultant mixed solution at a temperature of usually 50 to 300°C to produce composite hydroxide core particles, (4) adding an aqueous solution containing magnesium, aluminum, nickel and silicon to a water suspension containing the composite hydroxide core particles such that a molar ratio of a sum of magnesium, aluminum, nickel and silicon contained in the aqueous solution to a sum of magnesium and aluminum added upon production of the composite hydroxide core particles is usually 0.05 to 0.5, (5) aging the resultant mixed solution at a pH value of usually 9.0 to 13.0 and a temperature of usually 40 to 300°C to conduct a growth reaction in which a coat of a composite hydroxide of magnesium, aluminum, nickel and silicon newly added is topotactically formed on the surface of the respective composite hydroxide core particles, and (6) then subjecting the resultant composite hydroxide particles to filtration and washing.

The addition step (1), the mixing step (2) and the aging step (3) in the multi-stage reaction are the same as those of the one-stage reaction except adding no nickel raw material nor silicon raw material in the addition step (1) and aging at the temperature of 50 to 300°C.

The molar ratio of a sum of magnesium, aluminum, nickel and silicon newly added to a sum of magnesium and aluminum added in the production of the composite hydroxide core particles in the addition step (4) is usually 0.05 to 0.5, preferably 0.10 to 0.45, more preferably 0.12 to 0.4. When the molar ratio of a sum of magnesium, aluminum, nickel and silicon newly added to a sum of magnesium and aluminum added in the production of the composite hydroxide core particles is less than 0.05, the conversion (decomposition percentage) of hydrocarbons tends to be lowered, thereby failing to attain the aimed effects of the present invention. When the molar ratio of a sum of magnesium, aluminum, nickel and silicon newly added to a sum of magnesium and aluminum added in the production of the composite hydroxide core particles is more than 0.5, the fine metallic nickel particles tend to have an average particle diameter of more than 20 nm, so that the conversion (decomposition percentage) of hydrocarbons tends to be lowered, and the anti-coking property tends to be deteriorated.

The pH value of the mixed solution used in the growth reaction step (5) is usually 9.0 to 13.0, preferably 9.0 to 12.5, more preferably 9.5 to 12.0. When the pH value is less than 9.0, the magnesium, aluminum and nickel added in the step (4) tend to be present in an isolated state and mixed in the solution without forming a coating layer on the core particles upon the growth reaction, thereby failing to obtain the aimed catalyst of the present invention. When the pH value is more than 13.0, the amount of aluminum eluted tends to be too large, thereby failing to obtain the composition as aimed by the present invention.

The reaction temperature used in the growth reaction step (5) is usually 40 to 300°C, preferably 60 to 250°C. When the reaction temperature is less than 40°C, the magnesium, aluminum and nickel added tend to be present in an isolated state and mixed in the solution without forming a coating layer on the core particles upon the growth reaction, thereby failing to obtain the aimed catalyst of the present invention. When the reaction temperature is more than 300°C, large aluminum hydroxide particles or large aluminum oxide particles tend to be mixed in the composite hydroxide particles, resulting in accelerated sintering of the catalytically active fine metal particles, so that it may be difficult to obtain a catalyst having the aimed properties.

The aging time used in the growth reaction step (5) is not particularly limited. More specifically, the aging time is usually 1 to 80 hours, preferably 3 to 24 hours and more preferably 5 to 18 hours. When the aging time is less than 1 hour, the magnesium, aluminum and nickel added upon the growth reaction may fail to form a sufficient coating layer on the surface of the composite hydroxide core particles. The aging time of more than 80 hours tends to be disadvantageous from the industrial viewpoint.

The washing of the composite hydroxide particles may be conducted by a first washing stage (chemical solution-washing stage) using an aqueous solution of alkali such as NaOH, $NH_4OH$, $Na_2CO_3$, etc, and a second washing stage (water-washing stage) using pure water, etc.

The concentration of the aqueous alkali solution is usually 0.1 to 10 N, preferably 0.1 to 9.5 N, more preferably 0.5 to 9.0 N. The amount of the aqueous alkali solution used is usually 10 to 100 L, preferably 15 to 100 L, more preferably 15 to 95 L based on 1 kg of the composite hydroxide particles separated by filtration.

When the concentration of the aqueous alkali solution is less than 0.1 N, it may be difficult to fully remove impurities such as Cl, S and N from the composite hydroxide particles. On the other hand, when the concentration of the aqueous alkali solution is more than 10 N, magnesium or aluminum contained in the composite hydroxide particles tends to be eluted out therefrom.

Also, when the amount of the aqueous alkali solution used is less than 10 L/kg, it may be difficult to fully remove impurities from the composite hydroxide particles. On the other hand, when the amount of the aqueous alkali solution used is more than 100 L/kg, magnesium or aluminum tends to be eluted out from the composite hydroxide particles.

The temperature of the aqueous alkali solution used in the above washing step is not particularly limited, and there may be usually used a hot aqueous alkali solution. More specifically, the temperature of the aqueous alkali solution is preferably 30 to 90°C, more preferably 50 to 80°C.

After washing, the composite hydroxide particles may be dried by an ordinary method.

The composite hydroxide particles as a precursor of the hydrocarbon-decomposing catalyst of the present invention have an average plate surface diameter of usually 0.05 to 0.4 μm, preferably 0.1 to 0.3 μm. When the average plate surface diameter of the composite hydroxide particles is less than 0.05 μm, it may be difficult to subject the composite hydroxide particles to filtration and washing. As a result, it may also be difficult to industrially mass-produce the composite hydroxide particles. On the other hand, when the average plate surface diameter of the composite hydroxide particles is more than 0.4 μm, it may be difficult to obtain a catalyst molded product from the composite hydroxide particles.

The composite hydroxide particles have a crystallite size $D_{006}$ of usually 0.001 to 0.08 μm, preferably 0.002 to 0.07 μm. When the crystallite size $D_{006}$ is less than 0.001 μm, the water suspension tends to exhibit a very high viscosity, so that it may be difficult to industrially produce the composite hydroxide particles. On the other hand, when the crystallite size $D_{006}$ is more than 0.08 μm, it may be difficult to obtain a catalyst molded product from the composite hydroxide particles.

The composite hydroxide particles have a specific surface area value of usually 3.0 to 300 $m^2/g$, preferably 5.0 to 250 $m^2/g$. When the specific surface area value is less than 3.0 $m^2/g$, it may be difficult to obtain a catalyst molded product from the composite hydroxide particles. On the other hand, when the specific surface area value is more than 300 $m^2/g$, the water suspension tends to exhibit a very high viscosity, so that it may be difficult to subject the composite hydroxide particles to filtration and washing. As a result, it may also be difficult to industrially produce the composite hydroxide particles.

The ratio between magnesium and aluminum contained in the composite hydroxide particles is not particularly limited. For example, the molar ratio of magnesium to aluminum (Mg:Al) contained in the composite hydroxide particles is usually 4:1 to 1.5:1, preferably 2.5:1 to 1.6:1.

The nickel content of the composite hydroxide particles is usually 0.005 to 26.46% by weight, preferably 0.01 to 20% by weight based on the total weight of the composite hydroxide particles. Also, the molar ratio of the nickel to a sum of magnesium, aluminum, nickel, silicon (Si), etc., contained in the composite hydroxide particles (Ni/whole metal ions) is usually 0.001 to 0.32, preferably 0.0015 to 0.30.

The silicon content of the composite hydroxide particles is usually 0.001 to 10% by weight, preferably 0.01 to 8% by weight, more preferably 0.05 to 5% by weight based on the total weight of the composite hydroxide particles. When the silicon content is less than 0.001% by weight, the resultant composite hydroxide particles may fail to exhibit a sufficient sintering property. When the silicon content is more than 10% by weight, the excessive silicon tends to be reacted with nickel, resulting in deterioration in catalyst performance.

The porous oxide particles as a precursor for the hydrocarbon-decomposing catalyst of the present invention may be produced by calcining the above composite hydroxide particles at a temperature of usually 400 to 1600°C, preferably 450 to 1500°C, more preferably 500 to 1400°C. When the calcining temperature is less than 400°C, it may be difficult to obtain the aimed porous oxide particles. When the calcining temperature is more than 1600°C, the resultant particles tend to be deteriorated in properties required as a porous carrier. The calcination may be conducted in an atmosphere composed of oxygen, air, or an inert gas such as nitrogen and argon.

The calcining time used for production of the porous oxide particles is not particularly limited, and is, for example, usually 0.5 to 48 hours, preferably 1 to 24 hours. The calcining time of more than 48 hours tends to be disadvantageous from industrial viewpoints.

The nickel content of the porous oxide particles is usually 0.10 to 40% by weight, preferably 0.18 to 35% by weight based on the total weight of the porous oxide particles. Also, the moles of the nickel contained in the porous oxide particles as well as the molar ratio of the nickel to whole metal ions in the porous oxide particles are substantially the same as those of the composite hydroxide particles.

The porous oxide particles usually have an average plate surface diameter of 0.05 to 0.4 μm and a specific surface area value of 7.0 to 320 m$^2$/g.

The hydrocarbon-decomposing catalyst of the present invention may be produced by subjecting the porous oxide particles to reducing treatment at a temperature of usually 700 to 1100°C, preferably 700 to 1000°C, more preferably 700 to 950°C. When the reducing temperature of the oxide particles is less than 700°C, nickel tends to undergo no metallization, thereby failing to attain a sufficient catalytic activity as aimed by the present invention. When the reducing temperature of the oxide particles is more than 1100°C, sintering of nickel tends to proceed, resulting in production of fine metallic nickel particles having a too large particle size. As a result, the conversion (decomposition percentage) of lower hydrocarbons at a low temperature tends to be lowered, and the anti-coking property also tends to be deteriorated.

The atmosphere used upon the reducing treatment is not particularly limited as long as a reducing atmosphere such as a hydrogen-containing gas is used therein.

The reducing treatment time is not particularly limited. For example, the reducing treatment time is usually 0.5 to 24 hours, preferably 1 to 10 hours. The reducing treatment time of more than 24 hours tends to be disadvantageous from industrial viewpoints.

The catalyst thus obtained in the form of a powder or particles may be molded into a desired shape according to uses and applications thereof. Although the shape and size of the catalyst molded product is not particularly limited, examples of the shape of the catalyst molded product may include a spherical shape, a cylindrical shape, a tubular shape and a coat applied onto a honeycomb. The suitable size of the catalyst molded product of a spherical, cylindrical or tubular shape is usually about 0.1 to 30 mm. If required, various organic or inorganic binders may be added to the catalyst to suitably adjust a strength and a pore distribution density of the catalyst molded product. In addition, the catalyst may be granulated or molded before the heat treatment.

Alternatively, the hydrocarbon-decomposing catalyst of the present invention may be produced by calcining the composite hydroxide particles to obtain a composite oxide, hydrating the thus obtained composite oxide with an anion-containing aqueous solution to produce composite hydroxide particles again, carrying (supporting) nickel on the thus obtained composite hydroxide particles, and then heat-reducing the nickel-carrying composite hydroxide particles, if required, after being heat-calcined, by the same method as described above.

For example, after the composite hydroxide particles constituted of magnesium, aluminum and silicon are produced, molded and then calcined to form a porous oxide molded product, the thus obtained porous oxide molded product is immersed in a nickel-containing solution to regenerate a nickel-containing phase composed of the composite hydroxide particles in the vicinity of the surface of the molded product, thereby containing nickel therein and/or carrying (supporting) nickel thereon, and then the thus obtained nickel-containing and/or carrying molded product are heat-reduced, if required, after being heat-calcined, thereby obtaining the hydrocarbon-decomposing catalyst of the present invention.

Also, after the composite hydroxide particles containing nickel therein and/or carrying (supporting) nickel on the surface thereof are produced according to the above multi-stage reaction, molded and then calcined to form a porous oxide molded product, the thus obtained porous oxide molded product is further immersed in a nickel-containing solution to contain nickel in the vicinity of the surface of and/or carry (support) nickel on the surface of the molded product, or regenerate a nickel-containing phase composed of the composite hydroxide particles in the vicinity of the surface of the molded product, thereby containing nickel therein and/or carrying (supporting) nickel thereon, and then the thus obtained nickel-containing and/or carrying molded product may be heat-reduced, if required, after being heat-calcined, thereby obtaining the hydrocarbon-decomposing catalyst of the present invention.

Further, according to another preferred embodiment of the present invention, the hydrocarbon-decomposing catalyst may be obtained by producing the composite hydroxide particles as a precursor of the catalyst, heat-calcining the composite hydroxide particles at a temperature of usually 400 to 1500°C to form porous oxide particles, carrying (supporting) at least one element selected from the group consisting of gold, silver, platinum, palladium, rhodium, iridium, rhenium, ruthenium, copper, iron, cobalt, manganese, chromium, vanadium and titanium on the porous oxide particles, heat-calcining the thus obtained metal-carrying (supporting) porous oxide particles at a temperature of usually 250 to 650°C, and then heat-reducing the resultant particles at a temperature of usually 650 to 1100°C.

The at least one element selected from the group consisting of gold, silver, platinum, palladium, rhodium, iridium, rhenium, ruthenium, copper, iron, cobalt, manganese, chromium, vanadium and titanium may be carried (supported) on the above composite hydroxide particles, or the porous oxide particles or the molded product thereof by an ordinary method such as a precipitation method, a heat impregnation method, a cold impregnation method, a vacuum impregnation method, an equilibrium adsorption method, an evaporation to dryness method, a competitive adsorption method, an ion exchange method, a spray method and a coating method. In this case, there may also be used an organic binder. Also, upon producing the composite hydroxide particles, a solution containing at least one element selected from the group consisting of gold, silver, platinum, palladium, rhodium, iridium, rhenium, ruthenium, copper, iron, cobalt, manganese, chromium, vanadium and titanium may be added thereto to contain the element into the composite hydroxide particles.

Further, the porous oxide particles or the molded product thereof may be immersed in a solution containing the at least one element selected from the group consisting of gold, silver, platinum, palladium, rhodium, iridium, rhenium, ruthenium, copper, iron, cobalt, manganese, chromium, vanadium and titanium in order to regenerate a phase composed of the composite hydroxide particles containing at least one element selected from the group consisting of gold, silver, platinum, palladium, rhodium, iridium, rhenium, ruthenium, copper, iron, cobalt, manganese, chromium, vanadium and titanium in and/or on the porous oxide powder or particles or the molded product thereof, thereby containing the element therein and/or carrying (supporting) the element thereon.

Next, the porous oxide particles or the molded product thereof containing and/or carrying (supporting) at least one element selected from the group consisting of gold, silver, platinum, palladium, rhodium, iridium, rhenium, ruthenium, copper, iron, cobalt, manganese, chromium, vanadium and titanium, is calcined at a temperature of usually 250 to 600°C, thereby obtaining the catalyst of the present invention. When the calcining temperature is less than 250°C, decomposition of the salts tends to be insufficient. On the other hand, when the calcining temperature is more than 600°C, the sintering tends to proceed, resulting in deteriorated effect of inhibiting by-production of ammonia. As the calcining atmosphere, there may be used oxygen, air, or an inert gas such as nitrogen and argon.

Next, the method for decomposing hydrocarbons and the process for producing hydrogen using the hydrocarbon-decomposing catalyst according to the present invention are described.

In the method for decomposing hydrocarbons according to the present invention, the hydrocarbon-containing gas and steam are contacted with the hydrocarbon-decomposing catalyst of the present invention at a temperature of 250 to 850°C and a molar ratio of steam to carbon (S/C ratio) of 1.0 to 6.0.

The reaction temperature used in the above process is usually 250 to 850°C, preferably 300 to 650°C, more preferably 350 to 550°C. When the reaction temperature is less than 250°C, the conversion (decomposition percentage) of lower hydrocarbons tends to be lowered, so that in the case where the reaction is conducted for a long period of time, coking tends to be caused, resulting in deactivation of the catalyst. When the reaction temperature is more than 850°C, it may be difficult to attain the aimed effects of the present invention.

The molar ratio of steam to hydrocarbons (S/C ratio) is usually 1.0 to 6.0, preferably 1.5 to 6.0, more preferably 1.8 to 5.0. When the molar ratio of steam to hydrocarbons (S/C ratio) is less than 1.0, the anti-coking property tends to be deteriorated. When the molar ratio of steam to hydrocarbons (S/C ratio) is more than 6.0, a large amount of steam tends to be required upon producing hydrogen, resulting in high production costs, and therefore, industrially unpractical methods.

In the method for decomposing hydrocarbons by adding steam to the hydrocarbon-containing gas according to the present invention, the hydrocarbon-containing gas and steam may be suitably contacted with the hydrocarbon-decomposing catalyst at a space velocity (GHSV) of usually 100 to 1,000,000 $h^{-1}$, preferably 200 to 1,000,000 $h^{-1}$, more preferably 250 to 100,000 $h^{-1}$.

Further, in the present invention, the decomposition of hydrocarbons is preferably conducted by two separate steps including (1) a low-temperature decomposition step and (2) a high-temperature decomposition step.

For example, the method for decomposing hydrocarbons may include (1) a low-temperature decomposition step in which $C_2$ or more hydrocarbons contained in the hydrocarbon-containing gas are mainly decomposed to form a hydrocarbon-containing gas containing $C_1$ hydrocarbon as a main component, and (2) a high-temperature decomposition step in which the $C_1$ hydrocarbon contained as a main component in the hydrocarbon-containing gas obtained in the above low-temperature decomposition step (1) are decomposed, wherein in the low-temperature decomposition step (1) and/or the high-temperature decomposition step (2), the hydrocarbon-containing gas and steam are contacted with the hydrocarbon-decomposing catalyst of the present invention.

In the low-temperature decomposition step (1), $C_2$ or more hydrocarbons are decomposed. More specifically, the $C_2$ or more hydrocarbon-containing gas and steam are contacted with the hydrocarbon-decomposing catalyst of the present invention at a temperature of usually 250 to 650°C, a molar ratio of steam to carbon (S/C ratio) of usually 1.0 to 6.0 and a space velocity (GHSV) of usually 100 to 1,000,000, thereby decomposing the $C_2$ or more hydrocarbons.

The reaction temperature used in the low-temperature decomposition step (1) is usually 250 to 650°C, preferably 300 to 600°C, more preferably 350 to 550°C. When the reaction temperature is less than 250°C, the conversion (decomposition percentage) of lower hydrocarbons tends to be lowered, so that when the reaction is conducted for a long period of time, coking tends to be caused, resulting in deactivation of the catalyst. When the reaction temperature is more than 650°C, $C_1$ hydrocarbon tend to be decomposed.

The molar ratio of steam to hydrocarbons (S/C ratio) used in the low-temperature decomposition step (1) is usually 1.0 to 6.0, preferably 1.5 to 6.0, more preferably 1.8 to 5.0. When the molar ratio of steam to hydrocarbons (S/C ratio) is less than 1.0, the anti-coking property tends to be deteriorated. When the molar ratio of steam to hydrocarbons (S/C ratio) is more than 6.0, in order to decompose the $C_2$ or more hydrocarbons, it is necessary that a large amount of steam tends to be required upon producing hydrogen, resulting in high production costs, and therefore, industrially unpractical process.

Meanwhile, the space velocity (GHSV) used in the low-temperature decomposition step (1) is usually 100 to 1,000,000 h$^{-1}$, preferably 200 to 1,000,000 h$^{-1}$, more preferably 250 to 100,000 h$^{-1}$.

In the high-temperature decomposition step (2), $C_1$ hydrocarbon are decomposed. More specifically, the $C_1$ hydrocarbon-containing gas and steam are contacted with the hydrocarbon-decomposing catalyst of the present invention at a temperature of usually 300 to 850°C, a molar ratio of steam to carbon (S/C ratio) of usually 1.0 to 6.0 and a space velocity (GHSV) of usually 100 to 1,000,000, thereby decomposing the $C_1$ hydrocarbon to produce hydrogen.

The reaction temperature used in the high-temperature decomposition step (2) is usually 300 to 850°C, preferably 300 to 700°C, more preferably 400 to 700°C. When the reaction temperature is less than 300°C, the conversion (decomposition percentage) of lower hydrocarbons tends to be lowered, so that when the reaction is conducted for a long period of time, coking tends to be caused, finally resulting in deactivation of the catalyst. When the reaction temperature is more than 850°C, the active metal tends to suffer from sintering, sometimes resulting in deactivation of the catalyst.

The molar ratio of steam to hydrocarbons (S/C ratio) used in the high-temperature decomposition step (2) is usually 1.0 to 6.0, preferably 1.5 to 6.0, more preferably 1.8 to 5.0. When the molar ratio of steam to hydrocarbons (S/C ratio) is less than 1.0, the anti-coking property tends to be deteriorated. When the molar ratio of steam to hydrocarbons (S/C ratio) is more than 6.0, in order to decompose the $C_1$ hydrocarbon, it is necessary that a large amount of steam tends to be required upon producing hydrogen, resulting in high production costs, and therefore, industrially unpractical process.

Meanwhile, the space velocity (GHSV) used in the high-temperature decomposition step (2) is usually 100 to 1,000,000 h$^{-1}$, preferably 200 to 1, 000, 000 h$^{-1}$, more preferably 250 to 100,000 h$^{-1}$.

Next, the process for producing hydrogen by decomposing hydrocarbons according to the present invention is described. In the process for producing hydrogen according to the present invention, hydrocarbons are decomposed according to the above method for decomposing hydrocarbons, thereby producing hydrogen.

For example, the $C_1$ or more hydrocarbon-containing gas and steam are contacted with the hydrocarbon-decomposing catalyst of the present invention at a temperature of usually 300 to 850°C, a molar ratio of steam to hydrocarbons (S/C ratio) of usually 1.0 to 6.0 and a space velocity (GHSV) of usually 100 to 1,000,000, thereby producing hydrogen.

The reaction temperature used in the hydrogen production process is usually 300 to 850°C, preferably 300 to 700°C, more preferably 400 to 700°C. When the reaction temperature is less than 300°C, the conversion (decomposition percentage) of lower hydrocarbons tends to be lowered, so that when the reaction is conducted for a long period of time, coking tends to be caused, finally resulting in deactivation of the catalyst. When the reaction temperature is more than 850°C, the active metal tends to suffer from sintering, sometimes resulting in deactivation of the catalyst.

The molar ratio of steam to hydrocarbons (S/C ratio) used in the hydrogen production process is usually 1.0 to 6.0, preferably 1.5 to 6.0, more preferably 1.8 to 5.0. When the molar ratio of steam to hydrocarbons (S/C ratio) is less than 1.0, the anti-coking property tends to be deteriorated. When the molar ratio of steam to hydrocarbons (S/C ratio) is more than 6.0, in order to decompose the $C_1$ or more hydrocarbons, it is necessary that a large amount of steam tends to be required upon producing hydrogen, resulting in high production costs, and therefore, industrially unpractical process.

Meanwhile, the space velocity (GHSV) used in the hydrogen production process is usually 100 to 1,000,000 h$^{-1}$, preferably200 to 1,000,000 h$^{-1}$, more preferably 250 to 100,000 h$^{-1}$.

In the present invention, as the raw hydrocarbons, there may be used various hydrocarbons without any particular limitations. Examples of the hydrocarbons may include saturated aliphatic hydrocarbons such as methane, ethane, propane, butane, pentane, hexane and cyclohexane; unsaturated hydrocarbons such as ethylene, propylene and butene; aromatic hydrocarbons such as benzene, toluene and xylene; and mixtures of these compounds. Also, suitable examples of the industrially usable raw materials may include city gas 13A, natural gases, LPG, kerosene, gasoline, light oils and naphtha.

When the hydrocarbons used in the present invention are those kept in a liquid state at room temperature such as kerosene, gasoline and light oils, such hydrocarbons may be vaporized by an evaporator upon use.

The hydrocarbon-decomposing catalyst of the present invention can exhibit sufficient catalytic activity, durability, anti-coking property and anti-sulfur-poisoning property even when an autothermal reforming reaction used upon starting is changed over to steam reforming, and further even when the steam reforming is conducted for a long period of time. Besides, the hydrocarbon-decomposing catalyst of the present invention is optimum as a catalyst for power generation systems such as fuel cell systems into which SS (Start-up Shut-down) is introduced.

Hydrogen produced by the above hydrogen production process can be used in power generation systems such as fuel cells in which the hydrogen is electrochemically reacted with oxygen.

The reason why the hydrocarbon decomposing catalyst of the present invention can exhibit excellent catalytic activity, anti-coking property, strength and anti-sulfur-poisoning property is considered by the present inventors as follows, though it is not clearly determined.

That is, the hydrocarbon-decomposing catalyst of the present invention is enhanced in sintering property because of silicon contained therein, and therefore, can retain a sufficient strength capable of preventing the catalyst from being crushed and broken even when coking is caused within the catalyst particles or the catalyst molded product.

Further, owing to the production process, the metallic nickel particles are present in the form of fine particles having an average particle diameter of 1 to 20 nm, and therefore, can exhibit a high catalytic activity. In particular, when the metallic nickel particles are contained in the vicinity of and/or carried (supported) on the surface of the catalyst-forming particles or the catalyst molded product obtained by granulating the particles, the hydrocarbon-containing gas can be efficiently contacted with the nickel upon the hydrocarbon decomposition reaction, so that the catalyst can exhibit a more excellent catalytic activity.

Also, as described above, the hydrocarbon-decomposing catalyst of the present invention has a high catalytic activity. Therefore, the hydrocarbon-decomposing catalyst can exhibit an excellent anti-coking property and a high catalytic activity even under a less steam condition.

Further, since impurities contained in the catalyst are removed by washing, the number of active sites on nickel as an active metal is increased, so that the catalyst can exhibit an excellent catalytic activity.

In addition, since the hydrocarbon-decomposing catalyst of the present invention is fully washed, the amounts of impurities contained therein such as S, Cl and N can be decreased, and further since the porous carrier contains a large amount of magnesium, a very excellent anti-sulfur-poisoning property can be exhibited, so that the catalyst can exhibit an excellent catalytic activity from the viewpoint of durability.

Also, since the hydrocarbon-decomposing catalyst of the present invention contains therein and/or carries (supports) thereon at least one element selected from the group consisting of gold, silver, platinum, palladium, rhodium, iridium, rhenium, ruthenium, copper, iron, cobalt, manganese, chromium, vanadium and titanium, it is possible to more effectively inhibit by-production of ammonia.

In the system for decomposing hydrocarbons by adding steam to a raw material containing desulfurized $C_1$ or more hydrocarbons according to the present invention, the decomposition reaction is separated into a front stage (low-temperature decomposition step) and a rear stage (high-temperature decomposition step) such that $C_2$ or more hydrocarbons are mainly decomposed in a front stage (low-temperature decomposition step) reactor filled with the hydrocarbon-decomposing catalyst, and then the $C_1$ hydrocarbon contained in the reaction gas obtained in the front stage are decomposed in a rear stage (high-temperature decomposition step) reactor. As a result, since no $C_2$ or more hydrocarbons are decomposed in the rear stage (high-temperature decomposition step), it is possible to inhibit deterioration in catalytic activity of the catalyst due to coking, to a large extent, resulting in prolonged life of the reforming catalyst.

The hydrocarbon-decomposing catalyst of the present invention is calcined in the presence of silicon, and therefore, forms a very strong sintered body. As a result, even when the catalyst suffers from coking during the steam reforming reaction, the catalyst molded product can be prevented from being crushed and broken, and therefore, can exhibit a high strength and maintain an excellent catalytic activity.

In the hydrocarbon-decomposing catalyst of the present invention, since the amounts of impurities contained therein are reduced, i.e., since the chorine content is not more than 500 ppm, the nitrogen content is not less than 500 ppm and the sulfur content is not less than 600 ppm, the catalyst can exhibit an excellent catalytic activity.

In the hydrocarbon-decomposing catalyst of the present invention, since the metallic nickel is contained and/or carried (supported) in the form of very fine particles, the contact area of the metallic nickel as an active metal with hydrocarbons and steam can be increased, so that the catalyst can exhibit an excellent catalytic activity, and coking can be effectively prevented even when the steam reforming is conducted under a less steam condition.

The hydrocarbon-decomposing catalyst of the present invention can inhibit by-production of ammonia even in the case where nitrogen-containing hydrocarbons are used as a fuel in the hydrocarbon decomposition reaction in which the hydrocarbons and steam are mixed and reacted with each other.

Further, since the porous carrier contains a large amount of magnesium, the catalyst can exhibit an extremely excellent anti-sulfur-poisoning property, and can show an excellent catalytic activity from the viewpoint of durability.

Meanwhile, in the system of the present invention in which hydrocarbons are decomposed in two stages including a front stage (low-temperature decomposition step) and a rear stage (high-temperature decomposition step), the decomposition of $C_2$ or more hydrocarbons in the front stage (low-temperature decomposition step) means that the $C_2$ or more hydrocarbons are converted into methane, hydrogen, CO, $CO_2$, etc., and, as a result, are removed from the raw hydrocarbons.

Further, the hydrocarbon-decomposing catalyst of the present invention can be used not only as a catalyst for decomposing hydrocarbons by subjecting a hydrocarbon-containing gas to autothermal reforming (ATR), partial oxidation (POX), etc., but also as a carbon dioxide-reforming catalyst.

The power generation system using hydrogen includes PAFC, PEFC, SOFC, and fuel cell systems for micro-gas turbines or automobiles. The obtained hydrogen can also be used as a fuel for internal combustion engines of automobiles, etc.

The hydrocarbon-decomposing catalyst of the present invention is less expensive, and can exhibit an excellent catalytic activity capable of decomposing hydrocarbons, in particular, $C_2$ or more hydrocarbons, a good anti-coking property even under a less steam condition, a sufficient strength capable of preventing the catalyst from being crushed and broken even upon occurrence of coking inside thereof, and an excellent durability, and therefore, can be suitably used as a catalyst for decomposing hydrocarbons or a catalyst for producing hydrogen.

EXAMPLES

The present invention is described in more detail by Examples. However, the Examples are only illustrative and not intended to limit the scope of the present invention.

Various properties were measured by the following methods.

(1) The plate surface diameter of the composite hydroxide particles was expressed by an average of values measured from the micrograph obtained by an electronic microscope "TEM 1200EX" (acceleration voltage: 100 kV) manufactured by Nippon Denshi Co., Ltd.

(2) The $D_{006}$ (thickness of particles) of the composite hydroxide particles was expressed by the value calculated from a diffraction peak curve of a crystal plane ($D_{006}$) of the composite hydroxide particles according to the Scherrer's formula which peak curve was prepared by using a X-ray diffractometer "RINT 2500" manufactured by Rigaku Denki Co., Ltd., (tube: Cu; tube voltage: 40 kV; tube current: 300 mA; goniometer: wide-angle goniometer; sampling width: 0.020°; scanning speed: 2°/min; light-emitting slit: 1°; scattering slit: 1°; light-receiving slit: 0.50 mm).

(3) The composite hydroxide particles was identified by X-ray diffraction measurement conducted by using the same X-ray diffractometer as used above at a diffraction angle $2\theta$ of 3 to 80°.

(4) The particle sizes of particles made of metallic nickel as well as gold, silver, platinum, palladium, rhodium, iridium, rhenium, ruthenium, copper, iron, cobalt, manganese, chromium, vanadium and titanium were respectively expressed by an average of the values measured from a micrograph thereof. In addition, the particle size of the fine metal particles exceeding 10 nm was calculated according to the Scherrer's formula from the values measured by using a X-ray diffractometer "RINT 2500" manufactured by Rigaku Denki Co., Ltd., (tube: Cu; tube voltage: 40 kV; tube current: 300 mA; goniometer: wide-angle goniometer; sampling width: 0.020°; scanning speed: 2°/min; light-emitting slit: 1°; scattering slit: 1°; light-receiving slit: 0.50 mm). Meanwhile, it was confirmed that the particle sizes of particles made of metallic nickel as well as gold, silver, platinum, palladium, rhodium, iridium, rhenium, ruthenium, copper, iron, cobalt, manganese, chromium, vanadium and titanium as measured using the X-ray diffractometer were the same as those obtained from the micrograph.

(5) The contents of magnesium, aluminum, nickel, silicon, gold, silver, platinum, palladium, rhodium, iridium, rhenium, ruthenium, copper, iron, cobalt, manganese, chromium, vanadium and titanium as constitutional elements of the catalyst were determined by dissolving the catalyst in an acid and measuring the content of each element in the obtained solution by using a plasma emission spectroscopic device "SPS-4000" (manufactured by Seiko Denshi Kogyo Co., Ltd.).

(6) The contents of N and Cl in the composite hydroxide particles were measured by an ion chromatographic method.

(7) The specific surface area value was measured by a BET method using nitrogen.

(8) The S content in the composite hydroxide particles and the amount of carbon precipitated upon the steam reforming reaction were determined by measuring amounts of carbon in the catalyst before and after the catalyst reaction using a carbon and sulfur measuring apparatus.

(9) The strength of the catalyst molded product was expressed by an average of the values measured with respect to 100 samples using a digital force gauge.

Example 1:

<Production of hydrocarbon-decomposing catalyst>

221.8 g of $MgSO_4 \cdot 7H_2O$ and 72.93 g of $Al_2(SO_4)_3 \cdot 8H_2O$ were dissolved in water to prepare 1000 mL of a solution thereof. Separately, 1000 mL of a solution in which 24.12 g of $Na_2CO_3$ and 6.104 g of $Na_2SiO_3$ were dissolved, was added to 310 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 80°C for 6 hours, thereby obtaining composite hydroxide core particles. At this time, the pH value of the obtained reaction solution was 8.3.

Next, the resultant alkaline suspension was mixed with 500 mL of a mixed solution containing a magnesium salt, a nickel salt and an aluminum salt which was prepared by dissolving 18.48 g of $MgSO_4 \cdot H_2O$, 65.71 g of $NiSO_4 \cdot 6H_2O$ and 6.078 g of $Al_2(SO_4)_3 \cdot 8H_2O$ to adjust a pH of the reaction solution to 11.5. Further, the reaction solution was aged at 95°C for 3 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of 55°C 1N NaOH in an amount of 25 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.250.

As a result, it was confirmed that the obtained composite hydroxide particles had an average plate surface diameter of 0.215 $\mu$m, a crystallite size $D_{006}$ of 0.042 $\mu$m and a BET specific surface area of 78.2 $m^2$/g.

The resultant composite hydroxide particles were molded into spherical beads having a diameter of 3 mm. The obtained spherical beads were calcined in air at 1370°C for 8 hours to obtain oxide particles (beads shape), and then the thus obtained oxide particles were subjected to reducing treatment at 880°C for 2 hours in a gas flow containing hydrogen and argon at a volume ratio of 20/80, thereby obtaining a hydrocarbon-decomposing catalyst. It was confirmed that the nickel content in the resultant catalyst was 20.39% by weight (molar ratio: Ni/(Mg + Al + Ni + Si) = 0.156); the fine metallic nickel particles had a particle size of 1 nm; the obtained catalyst had a silicon (Si) content of 1.952% by weight and a sulfur (S) concentration of 0.5 ppm; and the spherical beads having a diameter of 3 mm had an average strength of 38 kg. Meanwhile, it was suggested that the fine metallic nickel particles were present only in the vicinity of the surface of the respective particles.

<u><Reaction using hydrocarbon-decomposing catalyst></u>

The performance of the hydrocarbon-decomposing catalyst was evaluated by the following method. That is, 20 to 50 g of the catalyst was filled in a stainless steel reaction tube (reactor) having a diameter of 20 mm to prepare a catalyst-filled tube. A raw material gas and steam were passed through the catalyst-filled tube under a reaction pressure of 0.5 MPa, a reaction temperature of 300 to 600°C and a space velocity of 50,000 $h^{-1}$. At this time, the reaction was conducted wherein the ratio of steam to carbon was 1.5, and another reaction was conducted wherein the ratio of steam to carbon was 3.0. Meanwhile, the reaction was conducted using propane, butane and city gas 13A as the raw material gas containing $C_2$ or more hydrocarbons.

Since $C_2$ or more hydrocarbons were decomposed into methane, CO, $CO_2$ and $H_2$, the catalyst performance was evaluated using the conversion (decomposition percentage) of the raw material gas (conversion (decomposition percentage) of the raw material gas used for evaluation of the catalyst performance) and the conversion (decomposition percentage) of Cn (conversion (decomposition percentage) of whole hydrocarbons) represented by the following formulae. Also, when using the city gas 13A, the conversion (decomposition percentage) of the $C_2$ or more hydrocarbons (such as ethane, propane, butane and pentane) contained in the raw material gas was calculated and regarded as the conversion (decomposition percentage) of the city gas 13A.

For example, in the case where propane was used as the raw material gas, the conversion (decomposition percentage) thereof was represented by the following formulae:

$$\text{Conversion (Decomposition Percentage) of Raw Material Gas} = 100 \times (CO + CO_2 + CH_4 + C_2H_6)/(CO + CO_2 + CH_4 + C_2H_6 + C_3H_8)$$

$$\text{Conversion (Decomposition Percentage) of Cn (Conversion (Decomposition Percentage) of Whole Hydrocarbons)} = (CO + CO_2)/(CO + CO_2 + CH_4 + C_2H_6 + C_3H_8)$$

Various particle properties of the hydrocarbon-decomposing catalyst are shown in Table 1 and the results of the above reaction are shown in Tables 2 to 7.

The strength shown in Table 1 was calculated as an average of the values measured with respect to 100 samples each obtained by calcining the hydrocarbon-decomposing catalyst at 1000°C for 5 hours.

In Tables 2 and 3, there is shown the relationship between the reaction temperature (300 to 600°C) and the conversion (decomposition percentage) of $C_2$ or more hydrocarbons (such as propane, butane and city gas 13A) when the reaction was conducted at a space velocity (GHSV) of 50,000 h$^{-1}$ and a ratio of steam to carbon (S/C ratio) of 3.0 for 24 hours.

In Table 4, there is shown the relationship between the reaction time and the conversion (decomposition percentage) of methane when the reaction was conducted using propane as the raw material gas at a space velocity (GHSV) of 50,000 h$^{-1}$, a reaction temperature of 700°C and a ratio of steam to carbon (S/C ratio) of 1.5 and 3.0.

In Table 5, there is shown the relationship between the reaction time, the amounts of carbon precipitated before and after measurement of the catalytic activity, and the strength of the catalyst molded product after the reaction, when the reaction was conducted using propane as the raw material gas at a space velocity (GHSV) of 50,000 h$^{-1}$, a reaction temperature of 700°C and a ratio of steam to carbon (S/C ratio) of 1.5.

In Table 6, there are shown the results of the hydrocarbon decomposition reaction in which the catalyst obtained in Example 1 was used in the low-temperature decomposition step and the high-temperature decomposition step such that $C_2$ or more hydrocarbons were decomposed in the low-temperature decomposition step, and then the hydrocarbons obtained in the low-temperature decomposition step containing $C_1$ hydrocarbon as a main component were decomposed in the high-temperature decomposition step.

That is, in Table 6, there are shown the relationships between the reaction time, the amounts of carbon precipitated before and after measurement of the catalytic activity and the strength of the catalyst molded product after the reaction, when the low-temperature decomposition step was conducted at a space velocity (GHSV) of 50,000 h$^{-1}$, a ratio of steam to carbon (S/C ratio) of 3.0 and a reaction temperature of 500°C, and the high-temperature decomposition step was conducted at a reaction temperature of 700°C. More specifically, in Tables 6-1, 6-2 and 6-3, there are shown the results using propane, butane and the city gas 13A, respectively, as the raw material gas. Meanwhile, as the raw material gas containing $C_2$ or more hydrocarbons, propane, butane and the city gas 13A were used in the reaction.

In Table 7-1, there is shown the relationship between the conversion (decomposition percentage) and the amount of ammonia by-produced when the reaction was conducted using the city gas 13A as the raw material gas at a space velocity (GHSV) of 50,000 h$^{-1}$, a reaction temperature of 400 to 700°C and a ratio of steam to carbon (S/C ratio) of 3.0. Whereas, in Table 7-2, there is shown the relationship between the conversion (decomposition percentage) and the amount of ammonia by-produced when the reaction was conducted using the city gas 13A containing 20% of nitrogen as the raw material gas at a space velocity (GHSV) of 50,000 h$^{-1}$, a reaction temperature of 400 to 700°C and a ratio of steam to carbon (S/C ratio) of 3.0.

Example 2:

82.08 g of $MgCl_2 \cdot 6H_2O$, 27.08 g of $AlCl_3 \cdot 6H_2O$, 87.68 g of $NiCl_2 \cdot 6H_2O$ and 23.821 g of $Na_2SiO_3$ were dissolved in water to prepare 1000 mL of a solution thereof. Separately, 1500 mL of a solution in which 16.64 g of $Na_2CO_3$ was dissolved, was added to 241.2 mL of NaOH (concentration: 14 mol/L) to prepare a mixed alkali solution having a total volume of 2500 mL. The previously prepared mixed solution containing the above magnesium salt, aluminum salt and nickel salt was added to the mixed alkali solution, and the resultant mixed solution was aged at 95°C for 10 hours, thereby obtaining composite hydroxide particles. At this time, the pH value of the obtained reaction solution was 9.5.

The thus obtained reaction solution containing the composite hydroxide particles containing magnesium, aluminum, nickel and silicon was filtered to separate the particles therefrom, and the thus separated particles were washed with a chemical solution composed of 18°C 1N $NH_3$ in an amount of 34 L per 1 kg of the composite hydroxide particles, and then washed with water, thereby obtaining composite hydroxide particles.

As a result, it was confirmed that the obtained composite hydroxide particles had an average plate surface diameter of 0.053 $\mu$m, a crystallite size $D_{006}$ of 0.008 $\mu$m and a BET specific surface area of 228.6 m$^2$/g.

The resultant composite hydroxide particles were molded into spherical beads having a diameter of 3 mm. The obtained spherical beads were calcined in air at 1150°C for 10 hours to obtain oxide particles, and then the thus obtained oxide particles were subjected to reducing treatment at 720°C for 8 hours in a gas flow containing hydrogen and argon at a volume ratio of 20/80, thereby obtaining a hydrocarbon-decomposing catalyst. It was confirmed that the nickel content in the resultant catalyst was 39.99% by weight (molar ratio: Ni/(Mg + Al + Ni + Si) = 0.314); the fine metallic nickel particles had a particle size of 4 nm; the obtained catalyst had a silicon (Si) content of 9.911% by weight and a chlorine (Cl) concentration of 89 ppm; and the spherical beads having a diameter of 3 mm had an average strength of 41 kg.

Example 3:

161.3 g of $MgCl_2 \cdot 6H_2O$ and 38.32 g of $AlCl_3 \cdot 6H_2O$ were dissolved in water to prepare 1000 mL of a solution thereof. Separately, 1000 mL of a solution in which 26.04 g of $Na_2CO_3$ and 2.451 g of $Na_2SiO_3$ were dissolved, was added to 355.3 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 55°C for 2 hours, thereby obtaining composite hydroxide core particles. At this time, the pH value of the obtained reaction solution was 7.5.

Next, the resultant alkaline suspension was mixed with 500 mL of a mixed solution containing a magnesium salt, a nickel salt and an aluminum salt which was prepared by dissolving 17.01 g of $MgCl_2 \cdot 6H_2O$, 0.389 g of $NiCl_2 \cdot 6H_2O$ and 4.04 g of $AlCl_3 \cdot 6H_2O$ to adjust a pH of the reaction solution to 9.3. Further, the reaction solution was aged at 154°C for 16 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of 85°C 0.2N $NH_3$ in an amount of 12 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.111.

As a result, it was confirmed that the obtained composite hydroxide particles had an average plate surface diameter of 0.094 $\mu$m, a crystallite size $D_{006}$ of 0.012 $\mu$m and a BET specific surface area of 178.3 $m^2$/g.

The resultant composite hydroxide particles were molded into spherical beads having a diameter of 3 mm. The obtained spherical beads were calcined in air at 412°C for 5 hours to obtain oxide particles, and then the thus obtained oxide particles were subjected to reducing treatment at 910°C for 4 hours in a gas flow containing hydrogen and argon at a volume ratio of 20/80, thereby obtaining a hydrocarbon-decomposing catalyst. It was confirmed that the nickel content in the resultant catalyst was 0.183% by weight (molar ratio: Ni/(Mg + Al + Ni + Si) = 0.0013); the fine metallic nickel particles had a particle size of 3 nm; the obtained catalyst had a silicon (Si) content of 1.046% by weight and a chlorine (Cl) concentration of 73 ppm; and the spherical beads having a diameter of 3 mm had an average strength of 32 kg. Meanwhile, it was suggested that the fine metallic nickel particles were present only in the vicinity of the surface of the respective particles.

Example 4:

167.8 g of $MgSO_4 \cdot 7H_2O$ and 61.32 g of $Al_2(SO_4)_3 \cdot 8H_2O$ were dissolved in water to prepare 1000 mL of a solution thereof. Separately, 1000 mL of a solution in which 22.69 g of $Na_2CO_3$ and 13.09 g of $Na_2SiO_3$ were dissolved, was added to 126.4 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 64°C for 9 hours, thereby obtaining composite hydroxide core particles. At this time, the pH value of the obtained reaction solution was 7.1.

Next, the resultant alkaline suspension was mixed with 500 mL of a mixed solution containing a magnesium salt, a nickel salt and an aluminum salt which was prepared by dissolving 35.69 g of $MgSO_4 \cdot 7H_2O$, 42.29 g of $NiSO_4 \cdot 6H_2O$ and 13.04 g of $Al_2(SO_4)_3 \cdot 8H_2O$ to adjust a pH of the reaction solution to 7.2. Further, the reaction solution was aged at 65°C for 4 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 74°C 9.7N NaOH aqueous solution in an amount of 98 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.333.

As a result, it was confirmed that the obtained composite hydroxide particles had an average plate surface diameter of 0.052 $\mu$m, a crystallite size $D_{006}$ of 0.002 $\mu$m and a BET specific surface area of 298.1 $m^2$/g.

The resultant composite hydroxide particles were molded into spherical beads having a diameter of 3 mm. The obtained spherical beads were calcined in air at 738°C for 3 hours to obtain oxide particles, and then the thus obtained oxide particles were subjected to reducing treatment at 1050°C for 3 hours in a gas flow containing hydrogen and argon at a volume ratio of 20/80, thereby obtaining a hydrocarbon-decomposing catalyst. It was confirmed that the nickel content in the resultant catalyst was 15.39% by weight (molar ratio: Ni/(Mg + Al + Ni + Si) = 0.115); the fine metallic nickel particles had a particle size of 12 nm; the obtained catalyst had a silicon (Si) content of 4.913% by weight and a sulfur (S) concentration of 0.2 ppm; and the spherical beads having a diameter of 3 mm had an average strength of 25 kg. Meanwhile, it was suggested that the fine metallic nickel particles were present only in the vicinity of the surface of the respective particles.

Example 5:

116.5 g of $MgSO_4 \cdot 7H_2O$ and 44.21 g of $Al_2(SO_4)_3 \cdot 8H_2O$ were dissolved in water to prepare 1000 mL of a solution thereof. Separately, 1000 mL of a solution in which 18.71 g of $Na_2CO_3$ and 0.865 g of $Na_2SiO_3$ were dissolved, was added to 191.2 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 162°C for 4 hours, thereby obtaining composite hydroxide core particles. At this time, the pH value of the obtained reaction solution was 8.4.

Next, the resultant alkaline suspension was mixed with 500 mL of a mixed solution containing a magnesium salt, a nickel salt and an aluminum salt which was prepared by dissolving 45.38 g of $MgSO_4 \cdot 7H_2O$, 74.48 g of $NiSO_4 \cdot 6H_2O$ and 17.22 g of $Al_2(SO_4)_3 \cdot 8H_2O$ to adjust a pH of the reaction solution to 9.8. Further, the reaction solution was aged at 85°C for 23 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 65°C mixed solution of 4.1N NaOH and 2.2N $Na_2CO_3$ in an amount of 42 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.448.

As a result, it was confirmed that the obtained composite hydroxide particles had an average plate surface diameter of 0.302 $\mu$m, a crystallite size $D_{006}$ of 0.052 $\mu$m and a BET specific surface area of 48.1 $m^2$/g.

The resultant composite hydroxide particles were molded into spherical beads having a diameter of 3 mm. The obtained spherical beads were calcined in air at 890°C for 6 hours to obtain oxide particles, and then the thus obtained oxide particles were subjected to reducing treatment at 850°C for 4 hours in a gas flow containing hydrogen and argon at a volume ratio of 20/80, thereby obtaining a hydrocarbon-decomposing catalyst. It was confirmed that the nickel content in the resultant catalyst was 29.59% by weight (molar ratio: Ni/(Mg + Al + Ni + Si) = 0.236); the fine metallic nickel particles had a particle size of 5 nm; the obtained catalyst had a silicon (Si) content of 0.352% by weight and a sulfur (S) concentration of 0.3 ppm; and the spherical beads having a diameter of 3 mm had an average strength of 33 kg. Meanwhile, it was suggested that the fine metallic nickel particles were present only in the vicinity of the surface of the respective particles.

Example 6:

43.83 g of $MgCl_2 \cdot 6H_2O$, 8.974 g of $AlCl_3 \cdot 6H_2O$ and 3.459 g of $NiCl_2 \cdot 6H_2O$ were dissolved in water to prepare 1000 mL of a solution thereof. Separately, 1500 mL of a solution in which 5.516 g of $Na_2CO_3$ and 14.07 g of $Na_2SiO_3$ was dissolved, was added to 328.1 mL of NaOH (concentration: 14 mol/L) to prepare a mixed alkali solution having a total volume of 2500 mL. The previously prepared mixed solution containing the above magnesium salt, aluminum salt and nickel salt was added to the mixed alkali solution, and the resultant mixed solution was aged at 78°C for 22 hours, thereby obtaining composite hydroxide particles. At this time, the pH value of the obtained reaction solution was 11.8.

The thus obtained reaction solution containing the composite hydroxide particles containing magnesium, aluminum, nickel and silicon was filtered to separate the particles therefrom, and the thus separated particles were washed with a chemical solution composed of a 48°C mixed solution of 2.2N NaOH and 0.1N $NH_3$ in an amount of 21 L per 1 kg of the composite hydroxide particles, and then washed with water, thereby obtaining composite hydroxide particles.

As a result, it was confirmed that the obtained composite hydroxide particles had an average plate surface diameter of 0.281 $\mu$m, a crystallite size $D_{006}$ of 0.048 $\mu$m and a BET specific surface area of 68.1 $m^2$/g.

The resultant composite hydroxide particles were molded into spherical beads having a diameter of 3 mm. The obtained spherical beads were calcined in air at 1250°C for 1 hour to obtain oxide particles, and then the thus obtained oxide particles were subjected to reducing treatment at 780°C for 9 hours in a gas flow containing hydrogen and argon at a volume ratio of 20/80, thereby obtaining a hydrocarbon-decomposing catalyst. It was confirmed that the nickel content in the resultant catalyst was 5.260% by weight (molar ratio: Ni/(Mg + Al + Ni + Si) = 0.035); the fine metallic nickel particles had a particle size of 19 nm; the obtained catalyst had a silicon (Si) content of 19.51% by weight and a chlorine (Cl) concentration of 91 ppm; and the spherical beads having a diameter of 3 mm had an average strength of 28 kg.

Example 7:

235.1 g of $Mg(NO_3)_3 \cdot 6H_2O$ and 78.15 g of $Al_2(NO_3)_3 \cdot 9H_2O$ were dissolved in water to prepare 1000 mL of a solution thereof. Separately, 1000 mL of a solution in which 35.77 g of $Na_2CO_3$ and 47.31 g of $Na_2SiO_3$ were dissolved, was added to 537.8 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 132°C for 1 hour, thereby obtaining composite hydroxide core particles. At this time, the pH value of the obtained reaction solution was 12.1.

Next, the resultant alkaline suspension was mixed with 500 mL of a mixed solution containing a magnesium salt, a nickel salt and an aluminum salt which was prepared by dissolving 21.86 g of $Mg(NO_3)_2 \cdot 6H_2O$, 45.08 g of $Ni(NO_3)_2 \cdot 6H_2O$ and 7.271 g of $Al_2(NO_3)_3 \cdot 9H_2O$ to adjust a pH of the reaction solution to 12.4. Further, the reaction solution was aged at 95°C for 8 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 37°C mixed solution of 6.8N NaOH and 4.5N $NH_3$ in an amount of 62 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.333. As a result, it was confirmed that the obtained composite hydroxide particles had an average plate surface diameter of 0.324 $\mu$m, a crystallite size $D_{006}$ of 0.068 $\mu$m and a BET specific surface area of 114.4 $m^2/g$.

The resultant composite hydroxide particles were molded into spherical beads having a diameter of 3 mm. The obtained spherical beads were calcined in air at 1530°C for 4.5 hours to obtain oxide particles, and then the thus obtained oxide particles were subjected to reducing treatment at 950°C for 6 hours in a gas flow containing hydrogen and argon at a volume ratio of 20/80, thereby obtaining a hydrocarbon-decomposing catalyst.

It was confirmed that the nickel content in the resultant catalyst was 10.89% by weight (molar ratio: Ni/(Mg + Al + Ni + Si) = 0.078); the fine metallic nickel particles had a particle size of 2 nm; the obtained catalyst had a silicon (Si) content of 13.03% by weight and a nitrogen (N) concentration of 88 ppm; and the spherical beads having a diameter of 3 mm had an average strength of 37 kg. Meanwhile, it was suggested that the fine metallic nickel particles were present only in the vicinity of the surface of the respective particles.

Example 8:

167.2 g of $MgSO_4 \cdot 7H_2O$ and 43.41 g of $Al_2(SO_4)_3 \cdot 8H_2O$ were dissolved in water to prepare 1000 mL of a solution thereof. Separately, 1000 mL of a solution in which 14.74 g of $Na_2CO_3$ and 3.684 g of $Na_2SiO_3$ were dissolved, was added to 299.4 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 84°C for 8 hours, thereby obtaining composite hydroxide core particles. At this time, the pH value of the obtained reaction solution was 8.8.

Next, the resultant alkaline suspension was mixed with 500 mL of a mixed solution containing a magnesium salt, a nickel salt and an aluminum salt which was prepared by dissolving 18.84 g of $MgSO_4 \cdot 7H_2O$, 4.231 g of $NiSO_4 \cdot 6H_2O$ and 4.891 g of $Al_2(SO_4)_3 \cdot 8H_2O$ to adjust a pH of the reaction solution to 9.3. Further, the reaction solution was aged at 93°C for 7 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 29°C mixed solution of 7.2N $NH_3$ and 2.4N $Na_2CO_3$ in an amount of 37 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.143. As a result, it was confirmed that the obtained composite hydroxide particles had an average plate surface diameter of 0.113 $\mu$m, a crystallite size $D_{006}$ of 0.021 $\mu$m and a BET specific surface area of 114.4 $m^2/g$.

The resultant composite hydroxide particles were molded into spherical beads having a diameter of 3 mm. The obtained spherical beads were calcined in air at 950°C for 6 hours to obtain oxide particles, and then the thus obtained oxide particles were subjected to reducing treatment at 1000°C for 3 hours in a gas flow containing hydrogen and argon at a volume ratio of 20/80, thereby obtaining a hydrocarbon-decomposing catalyst. It was confirmed that the nickel content in the resultant catalyst was 2.231% by weight (molar ratio: Ni/(Mg + Al + Ni + Si) = 0.016); the fine metallic nickel particles had a particle size of 1 nm; the obtained catalyst had a silicon (Si) content of 2.002% by weight and a sulfur (S) concentration of 0.2 ppm; and the spherical beads having a diameter of 3 mm had an average strength of 40 kg. Meanwhile, it was suggested that the fine metallic nickel particles were present only in the vicinity of the surface of the respective particles.

Example 9:

98.95 g of $MgCl_2 \cdot 6H_2O$ and 20.26 g of $AlCl_3 \cdot 6H_2O$ were dissolved in water to prepare 1000 mL of a solution thereof. Separately, 1000 mL of a solution in which 14.49 g of $Na_2CO_3$ and 16.73 g of $Na_2SiO_3$ were dissolved, was added to 537.2 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 65°C for 6 hours, thereby obtaining composite hydroxide core particles. At this time, the pH value of the obtained reaction solution was 12.5.

Next, the resultant alkaline suspension was mixed with 500 mL of a mixed solution containing a magnesium salt, a nickel salt and an aluminum salt which was prepared by dissolving 16.16 g of $MgCl_2 \cdot 6H_2O$, 70.16 g of $NiCl_2 \cdot 6H_2O$ and 3.309 g of $AlCl_3 \cdot 6H_2O$ to adjust a pH of the reaction solution to 12.7. Further, the reaction solution was aged at 238°C for 11 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of 45°C 4.6N $NH_3$ in an amount of 45 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.215.

As a result, it was confirmed that the obtained composite hydroxide particles had an average plate surface diameter of 0.398 μm, a crystallite size $D_{006}$ of 0.079 μm and a BET specific surface area of 3.1 $m^2$/g.

The resultant composite hydroxide particles were molded into spherical beads having a diameter of 3 mm. The obtained spherical beads were calcined in air at 550°C for 23 hours to obtain oxide particles, and then the thus obtained oxide particles were subjected to reducing treatment at 810°C for 2.5 hours in a gas flow containing hydrogen and argon at a volume ratio of 20/80, thereby obtaining a hydrocarbon-decomposing catalyst.

It was confirmed that the nickel content in the resultant catalyst was 32.58% by weight (molar ratio: Ni/(Mg + Al + Ni + Si) = 0.251); the fine metallic nickel particles had a particle size of 16 nm; the obtained catalyst had a silicon (Si) content of 7.087% by weight and a chlorine (Cl) concentration of 68 ppm; and the spherical beads having a diameter of 3 mm had an average strength of 38 kg. Meanwhile, it was suggested that the fine metallic nickel particles were present only in the vicinity of the surface of the respective particles.

Example 10:

69.09 g of $MgCl_2 \cdot 6H_2O$, 14.14 g of $AlCl_3 \cdot 6H_2O$ and 0.545 g of $NiCl_2 \cdot 6H_2O$ were dissolved in water to prepare 1000 mL of a solution thereof. Separately, 1500 mL of a solution in which 8.695 g of $Na_2CO_3$ and 17.166 g of $Na_2SiO_3$ were dissolved, was added to 329.2 mL of NaOH (concentration: 14 mol/L) to prepare a mixed alkali solution having a total volume of 2500 mL. The previously prepared mixed solution containing the above magnesium salt, aluminum salt and nickel salt was added to the mixed alkali solution, and the resultant mixed solution was aged at 71°C for 15 hours, thereby obtaining composite hydroxide core particles. At this time, the pH value of the obtained reaction solution was 10.4.

The thus obtained reaction solution containing the composite hydroxide particles containing magnesium, aluminum, nickel and silicon was filtered to separate the particles therefrom, and the thus separated particles were washed with a chemical solution composed of 58°C 3.2N NaOH in an amount of 76 L per 1 kg of the composite hydroxide particles, and then washed with water, thereby obtaining composite hydroxide particles. As a result, it was confirmed that the obtained composite hydroxide particles had an average plate surface diameter of 0.152 μm, a crystallite size $D_{006}$ of 0.038 μm and a BET specific surface area of 82.5 $m^2$/g.

The resultant composite hydroxide particles were molded into spherical beads having a diameter of 3 mm. The obtained spherical beads were calcined in air at 1050°C for 9 hours to obtain oxide particles, and then the thus obtained oxide particles were subjected to reducing treatment at 970°C for 1 hour in a gas flow containing hydrogen and argon at a volume ratio of 20/80, thereby obtaining a hydrocarbon-decomposing catalyst.

It was confirmed that the nickel content in the resultant catalyst was 0.579% by weight (molar ratio: Ni/(Mg + Al + Ni + Si) = 0.004); the fine metallic nickel particles had a particle size of 8 nm; the obtained catalyst had a silicon (Si) content of 16.63% by weight and a chlorine (Cl) concentration of 82 ppm; and the spherical beads having a diameter of 3 mm had an average strength of 35 kg.

Example 11:

170.9 g of $Mg(NO_3)_2 \cdot 6H_2O$ and 50.02 g of $Al(NO_3)_3 \cdot 9H_2O$ were dissolved in water to prepare 1000 mL of a solution thereof. Separately, 1000 mL of a solution in which 27.82 g of $Na_2CO_3$ and 0.106 g of $Na_2SiO_3$ were dissolved,

was added to 170.0 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 85°C for 7 hours, thereby obtaining composite hydroxide core particles. At this time, the pH value of the obtained reaction solution was 11.8.

Next, the resultant alkaline suspension was mixed with 500 mL of a mixed solution containing a magnesium salt, a nickel salt and an aluminum salt which was prepared by dissolving 69.44 g of $Mg(NO_3)_2 \cdot 6H_2O$, 25.20 g of $Ni(NO_3)_2 \cdot 6H_2O$ and 20.30 g of $Al(NO_3)_3 \cdot 9H_2O$ to adjust a pH of the reaction solution to 11.5. Further, the reaction solution was aged at 95°C for 8 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 24°C 3.5N NaOH mixed solution in an amount of 34 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.333.

As a result, it was confirmed that the obtained composite hydroxide particles had an average plate surface diameter of 0.176 $\mu$m, a crystallite size $D_{006}$ of 0.043 $\mu$m and a BET specific surface area of 168.4 $m^2$/g.

The resultant composite hydroxide particles were molded into spherical beads having a diameter of 3 mm. The obtained spherical beads were calcined in air at 1220°C for 11 hours to obtain oxide particles, and then the thus obtained oxide particles were subjected to reducing treatment at 810°C for 2 hours in a gas flow containing hydrogen and argon at a volume ratio of 20/80, thereby obtaining a hydrocarbon-decomposing catalyst.

It was confirmed that the nickel content in the resultant catalyst was 8.201% by weight (molar ratio: Ni/(Mg + Al + Ni + Si) = 0.062); the fine metallic nickel particles had a particle size of 3 nm; the obtained catalyst had a silicon (Si) content of 0.042% by weight and a nitrogen (N) concentration of 324 ppm; and the spherical beads having a diameter of 3 mm had an average strength of 24 kg. Meanwhile, it was suggested that the fine metallic nickel particles were present only in the vicinity of the surface of the respective particles.

Example 12:

116.3 g of $MgSO_4 \cdot 7H_2O$ and 36.99 g of $Al_2(SO_4)_3 \cdot 8H_2O$ were dissolved in water to prepare 1000 mL of a solution thereof. Separately, 1000 mL of a solution in which 11.52 g of $Na_2CO_3$ was dissolved, was added to 421 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 63°C for 18 hours, thereby obtaining composite hydroxide core particles. At this time, the pH value of the obtained reaction solution was 12.4.

Next, the resultant alkaline suspension was mixed with 500 mL of a mixed solution containing a magnesium salt, a nickel salt and an aluminum salt which was prepared by dissolving 2.329 g of $mgSO_4 \cdot 7H_2O$, 24.04 g of $NiSO_4 \cdot 6H_2O$, 0.741 g of $Al_2(SO_4)_3 \cdot 8H_2O$ and 0.004 g of $Na_2SiO_3$ to adjust a pH of the reaction solution to 12.2. Further, the reaction solution was aged at 125°C for 8 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 52°C mixed solution of 2.5N NaOH and 1.4N $Na_2CO_3$ in an amount of 18 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.143.

As a result, it was confirmed that the obtained composite hydroxide particles had an average plate surface diameter of 0.302 $\mu$m, a crystallite size $D_{006}$ of 0.064 $\mu$m and a BET specific surface area of 18.4 $m^2$/g.

The resultant composite hydroxide particles were molded into spherical beads having a diameter of 3 mm. The obtained spherical beads were calcined in air at 1150°C for 21 hours to obtain oxide particles, and then the thus obtained oxide particles were subjected to reducing treatment at 920°C for 1 hour in a gas flow containing hydrogen and argon at a volume ratio of 20/80, thereby obtaining a hydrocarbon-decomposing catalyst.

It was confirmed that the nickel content in the resultant catalyst was 16.43% by weight (molar ratio: Ni/(Mg + Al + Ni + Si) = 0.126); the fine metallic nickel particles had a particle size of 4 nm; the obtained catalyst had a silicon (Si) content of 0.003% by weight and a sulfur (S) concentration of 186 ppm; and the spherical beads having a diameter of 3 mm had an average strength of 18 kg. Meanwhile, it was suggested that the fine metallic nickel particles were present only in the vicinity of the surface of the respective particles.

Example 13:

168.7 g of $MgSO_4 \cdot 7H_2O$ and 79.25 g of $Al_2(SO_4)_3 \cdot 8H_2O$ were dissolved in water to prepare 1000 mL of a solution thereof. Separately, 1000 mL of a solution in which 24.98 g of $Na_2CO_3$ was dissolved, was added to 323.0 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 118°C for 11 hours, thereby obtaining composite hydroxide core particles. At this time, the pH value of the obtained reaction solution was 10.8.

Next, the resultant alkaline suspension was mixed with 500 mL of a mixed solution containing a magnesium salt, a nickel salt and an aluminum salt which was prepared by dissolving 5.515 g of $MgSO_4 \cdot 7H_2O$, 84.05 g of $NiSO_4 \cdot 6H_2O$, 2.591 g of $Al_2(SO_4)_3 \cdot 8H_2O$ and 13.01 g of $Na_2SiO_3$ to adjust a pH of the reaction solution to 10.6. Further, the reaction solution was aged at 157°C for 6 hours, thereby topotactically growing a composite hydroxide on the surface of the composite hydroxide core particles.

The thus obtained reaction solution containing the composite hydroxide particles containing magnesium, aluminum, nickel and silicon was filtered to separate the particles therefrom, and the thus separated particles were washed with a chemical solution composed of a 38°C 7.2N $Na_2CO_3$ mixed solution in an amount of 11 L per 1 kg of the composite hydroxide particles, and then washed with water, thereby obtaining composite hydroxide particles. Meanwhile, the molar ratio of a sum of magnesium, aluminum, nickel and silicon added upon the growth reaction to a sum of magnesium and aluminum added upon production of the core particles was 0.313.

As a result, it was confirmed that the obtained composite hydroxide particles had an average plate surface diameter of 0.335 $\mu$m, a crystallite size $D_{006}$ of 0.049 $\mu$m and a BET specific surface area of 35.7 $m^2$/g.

The resultant composite hydroxide particles were molded into spherical beads having a diameter of 3 mm. The obtained spherical beads were calcined in air at 1240°C for 16 hours to obtain oxide particles, and then the thus obtained oxide particles were subjected to reducing treatment at 830°C for 6 hours in a gas flow containing hydrogen and argon at a volume ratio of 20/80, thereby obtaining a hydrocarbon-decomposing catalyst. It was confirmed that the nickel content in the resultant catalyst was 27.83% by weight (molar ratio: Ni/(Mg + Al + Ni + Si) = 0.218); the fine metallic nickel particles had a particle size of 2 nm.

Further, it was confirmed that the obtained catalyst had a silicon (Si) content of 4.441% by weight and a sulfur (S) concentration of 547 ppm; and the spherical beads having a diameter of 3 mm had an average strength of 32 kg. Meanwhile, it was suggested that the fine metallic nickel particles were present only in the vicinity of the surface of the respective particles.

Example 14:

53.53 g of $MgSO_4 \cdot 7H_2O$, 17.60 g of $Al_2(SO_4)_3 \cdot 8H_2O$, 19.03 g of $NiSO_4 \cdot 6H_2O$ and 0.005 g of $K_2[PdCl_4]$ were dissolved in water to prepare 1000 mL of a solution thereof. Separately, 1000 mL of a solution in which 5.373 g of $Na_2CO_3$ and 7.072 g of $Na_2SiO_3$ were dissolved, was added to 120.0 mL of NaOH (concentration: 14 mol/L) to prepare a mixed alkali solution having a total volume of 2000 mL. The previously prepared mixed solution containing the above magnesium salt, aluminum salt, nickel salt and palladium salt was added to the mixed alkali solution, and the resultant mixed solution was aged at 65°C for 16 hours, thereby obtaining composite hydroxide particles. At this time, the pH value of the obtained reaction solution was 11.1.

The thus obtained reaction solution containing the composite hydroxide particles containing magnesium, aluminum, nickel, silicon and palladium (Pd) was filtered to separate the particles therefrom, and the thus separated particles were washed with a chemical solution composed of a 55°C 1.5N NaOH solution in an amount of 18 L per 1 kg of the composite hydroxide particles, and then washed with water, thereby obtaining composite hydroxide particles.

As a result, it was confirmed that the obtained composite hydroxide particles had an average plate surface diameter of 0.155 $\mu$m, a crystallite size $D_{006}$ of 0.037 $\mu$m and a BET specific surface area of 112.3 $m^2$/g.

The resultant composite hydroxide particles were molded into spherical beads having a diameter of 3 mm. The obtained spherical beads were calcined in air at 1150°C for 8 hours to obtain oxide particles, and then the thus obtained oxide particles were subjected to reducing treatment at 820°C for 3 hours in a gas flow containing hydrogen and argon at a volume ratio of 20/80, thereby obtaining a hydrocarbon-decomposing catalyst.

It was confirmed that the nickel content in the resultant catalyst was 23.19% by weight (molar ratio: Ni/(Mg + Al + Ni + Si + Pd) = 0.172); the fine metallic nickel particles had a particle size of 12 nm; the obtained catalyst had a silicon (Si) content of 8.879% by weight and a sulfur (S) concentration of 122 ppm; the spherical beads having a diameter of 3 mm had an average strength of 24 kg. Further, it was confirmed that the palladium content in the resultant catalyst was 0.031% by weight based on the weight of the metallic nickel contained in the catalyst, and the fine metallic palladium particles had a particle size of 5 nm.

Example 15:

299.1 g of $Mg(NO_3)_2 \cdot 6H_2O$, 104.2 g of $Al(NO_3)_3 \cdot 6H_2O$ and 48.47 g of $Ni(NO_3)_2 \cdot 6H_2O$ were dissolved in water to prepare 1500 mL of a solution thereof. Separately, 500 mL of a solution in which 42.12 g of $Na_2CO_3$ and 13.56 g of $Na_2SiO_3$ were dissolved, was added to 228 mL of NaOH (concentration: 14 mol/L) to prepare a mixed alkali solution having a total volume of 2000 mL. The previously prepared mixed solution containing the above magnesium salt, aluminum salt and nickel salt was added to the mixed alkali solution, and the resultant mixed solution was aged at 75°C for 5 hours, thereby obtaining composite hydroxide particles. At this time, the pH value of the obtained reaction solution was 10.8.

The thus obtained reaction solution containing the composite hydroxide particles containing magnesium, aluminum, nickel and silicon was filtered to separate the particles therefrom, and the thus separated particles were washed with a chemical solution composed of a 45°C 2.4N NaOH solution in an amount of 24 L per 1 kg of the composite hydroxide particles, and then washed with water, thereby obtaining composite hydroxide particles.

As a result, it was confirmed that the obtained composite hydroxide particles had an average plate surface diameter of 0.232 $\mu$m, a crystallite size $D_{006}$ of 0.048 $\mu$m and a BET specific surface area of 31.2 $m^2/g$.

The resultant composite hydroxide particles were molded into spherical beads having a diameter of 3 mm. The obtained spherical beads were calcined in air at 950°C for 1 hour to obtain a molded product of oxide particles. The thus formed molded product of the oxide particles was immersed in an aqueous manganese salt solution separately prepared by dissolving $Mn(NO_3)_2 \cdot H_2O$ in pure water to impregnate the aqueous manganese salt solution into a surface layer portion of the molded product from the surface thereof to reconstruct a phase of the composite hydroxide containing magnesium, aluminum, nickel and manganese, thereby obtaining a molded product composed of the oxide and a layered double hydroxide formed around a peripheral portion of the oxide. The thus obtained molded product was calcined at 450°C for 2 hours and then subjected to reducing treatment at 820°C for 5 hours in a gas flow containing hydrogen and argon at a volume ratio of 20/80, thereby obtaining a hydrocarbon-decomposing catalyst. It was confirmed that the nickel content in the resultant catalyst was 11.02% by weight (molar ratio: Ni/(Mg + Al + Ni + Si + Mn) = 0.083); the fine metallic nickel particles had a particle size of 8 nm; the obtained catalyst had a silicon (Si) content of 3.537% by weight and a nitrogen (N) concentration of 82 ppm; the spherical beads having a diameter of 3 mm had an average strength of 31 kg. Further, it was confirmed that the manganese content in the resultant catalyst was 5.032% by weight based on the weight of the metallic nickel contained in the catalyst, and the fine metallic manganese particles had a particle size of 25 nm.

Example 16:

The beads-shaped molded product of the oxide particles obtained in Example 1 was sprayed with a solution prepared by dissolving 1.169 g of $K_2[Pt(CN)_4] \cdot 3H_2O$ in pure water to carry (support) Pt on the molded product. Thereafter, the Pt-carrying molded product was calcined in air at 315°C for 2 hours, and then subjected to reducing treatment under the same conditions as used in Example 1. As a result, it was confirmed that the particle size of the metallic nickel particles in the catalyst was substantially identical to that of the particles obtained in Example 1; the nickel content in the resultant catalyst was 20.25% by weight (molar ratio: Ni/(Mg + Al + Ni + Si) = 0.156). Further, it was confirmed that the Pt content in the resultant catalyst was 3.621% by weight based on the weight of the metallic nickel contained in the catalyst, and the fine metallic Pt particles had a particle size of 3 nm.

Example 17:

On the beads-shaped molded product of the oxide particles obtained in Example 1 was dropped a solution prepared by dissolving 3.676 g of $RhCl_3 \cdot 3H_2O$ and 3.236 g of $Cu(NO_3)_2 \cdot 3H_2O$ in pure water. Next, the molded product was placed on a 100°C hot plate to evaporate water therefrom. The thus obtained rhodium and copper-carrying spherical beads were calcined in air at 320°C for 5 hours, and then subjected to reducing treatment under the same conditions as used in Example 1. As a result, it was confirmed that the particle size of the metallic nickel particles in the catalyst was substantially identical to that of the particles obtained in Example 1; the nickel content in the resultant catalyst was 19.77% by weight (molar ratio: Ni/(Mg + Al + Ni + Si) = 0.154). Further, it was confirmed that the rhodium content in the resultant catalyst was 9.821% by weight based on the weight of the metallic nickel contained in the catalyst, and the fine metallic rhodium particles had a particle size of 22 nm, whereas the copper content in the resultant catalyst was 5.824% by weight based on the weight of the metallic nickel contained in the catalyst, and the fine metallic copper particles had a particle size of 28 nm.

Example 18:

The beads having a diameter of 3 mm which were obtained in Example 1 were sprayed with a solution prepared

by dissolving 1.911 g of $AgNO_3$ and 0.054 g of $VCl_3$ in pure water to carry Ag and V on the beads. The thus obtained Ag and V-carrying beads were calcined in air at 355°C for 2 hours, and then subjected to reducing treatment under the same conditions as used in Example 1. As a result, it was confirmed that the particle size of the metallic nickel particles in the catalyst was substantially identical to that of the particles obtained in Example 1; the nickel content in the resultant catalyst was 20.01% by weight (molar ratio: Ni/(Mg + Al + Ni + Si) = 0.155). Further, it was confirmed that the Ag content in the resultant catalyst was 8.235% by weight based on the weight of the metallic nickel contained in the catalyst, and the fine metallic Ag particles had a particle size of 15 nm, whereas the vanadium (V) content in the resultant catalyst was 0.121% by weight based on the weight of the metallic nickel contained in the catalyst, and the fine metallic vanadium particles had a particle size of 21 nm.

Comparative Example 1:

**[0224]** 57.36 g of $MgSO_4{\cdot}7H_2O$ and 19.51 g of $Al_2(SO_4)_3{\cdot}8H_2O$ were dissolved in water to prepare 1000 mL of a solution thereof. Separately, 1000 mL of a solution in which 6.498 g of $Na_2CO_3$ was dissolved, was added to 391.2 mL of NaOH (concentration: 14 mol/L) to prepare a mixed alkali solution having a total volume of 2000 mL. The previously prepared mixed solution containing the above magnesium salt and aluminum salt was added to the mixed alkali solution, and the resultant mixed solution was aged at 98°C for 2 hours, thereby obtaining composite hydroxide core particles. At this time, the pH value of the obtained reaction solution was 11.2.

**[0225]** Next, the resultant alkaline suspension was mixed with 500 mL of a mixed solution containing a magnesium salt, a nickel salt and an aluminum salt which was prepared by dissolving 5.221 g of $MgSO_4{\cdot}7H_2O$, 9.604 g of $NiSO_4{\cdot}6H_2O$ and 1.776 g of $Al_2(SO_4)_3{\cdot}8H_2O$ to adjust a pH of the reaction solution to 11.9. Further, the reaction solution was aged at 125°C for 11 hours, thereby topotactically growing a composite hydroxide on the surface of the composite hydroxide core particles. The thus obtained reaction solution containing the composite hydroxide particles containing magnesium, aluminum and nickel was filtered to separate the particles therefrom, and the thus separated particles were washed with a chemical solution composed of 38°C 3.1N NaOH in an amount of 41 L per 1 kg of the composite hydroxide particles, and then washed with water, thereby obtaining composite hydroxide particles. Meanwhile, the molar ratio of a sum of magnesium, aluminum and nickel added upon the growth reaction to a sum of magnesium and aluminum added upon production of the core particles was 0.187. As a result, it was confirmed that the obtained composite hydroxide particles had an average plate surface diameter of 0.093 μm, a crystallite size $D_{006}$ of 0.034 μm and a BET specific surface area of 127.3 $m^2/g$.

**[0226]** The resultant composite hydroxide particles were molded into spherical beads having a diameter of 3 mm. The obtained spherical beads were calcined in air at 1015°C for 22 hours to obtain oxide particles, and then the thus obtained oxide particles were subjected to reducing treatment at 830°C for 6 hours in a gas flow containing hydrogen and argon at a volume ratio of 20/80, thereby obtaining a hydrocarbon-decomposing catalyst. It was confirmed that the nickel content in the resultant catalyst was 12.28% by weight (molar ratio: Ni/(Mg + Al + Ni) = 0.091); the fine metallic nickel particles had a particle size of 9 nm. Further, it was confirmed that the obtained catalyst had a silicon (Si) content of 0% by weight and a sulfur (S) concentration of 0.7 ppm; and the spherical beads having a diameter of 3 mm had an average strength of 11 kg. Meanwhile, it was suggested that the fine metallic nickel particles were present over a whole portion of the respective particles.

Comparative Example 2:

**[0227]** 108.2 g of $MgSO_4{\cdot}7H_2O$, 42.69 g of $Al_2(SO_4)_3{\cdot}8H_2O$ and 27.69 g of $NiSO_4{\cdot}6H_2O$ were dissolved in water to prepare 1000 mL of a solution thereof. Separately, 1500 mL of a solution in which 13.03 g of $Na_2CO_3$ was dissolved, was added to 88 mL of NaOH (concentration: 14 mol/L) to prepare a mixed alkali solution having a total volume of 2500 mL. The previously prepared mixed solution containing the above magnesium salt, aluminum salt and nickel salt was added to the mixed alkali solution, and the resultant mixed solution was aged at 71°C for 3 hours, thereby obtaining composite hydroxide particles. At this time, the pH value of the obtained reaction solution was 9.1.

**[0228]** As a result, it was confirmed that the obtained composite hydroxide particles had an average plate surface diameter of 0.042 μm, a crystallite size $D_{006}$ of 0.012 μm and a BET specific surface area of 128.63 $m^2/g$.

**[0229]** The resultant composite hydroxide particles were molded into spherical beads having a diameter of 3 mm. The obtained spherical beads were calcined in air at 1090°C for 4 hours to obtain oxide particles, and then the thus obtained oxide particles were subjected to reducing treatment at 820°C for 8 hours in a gas flow containing hydrogen and argon at a volume ratio of 20/80, thereby obtaining a hydrocarbon-decomposing catalyst. It was confirmed that the nickel content in the resultant catalyst was 18.84% by weight (molar ratio: Ni/(Mg + Al + Ni) = 0.146); the fine metallic nickel particles had a particle size of 4 nm; the obtained catalyst had a silicon (Si) content of 0% by weight and a sulfur (S) concentration of 1063 ppm; and the spherical beads having a diameter of 3 mm had an average strength of 9 kg. Meanwhile, it was suggested that the fine metallic nickel particles were present only in the vicinity of the surface of the

respective particles.

Comparative Example 3:

α-alumina particles were molded into spherical beads having a diameter of 2.5 mm. The obtained spherical beads were calcined in air at 1150°C for 10 hours. The calcined beads were sprayed and coated with 1000 mL of a solution prepared by dissolving 212.2 g of $Ni(NO_3)_2 \cdot 6H_2O$ in pure water, dried and then calcined again in air at 660°C for 6 hours. Further, the beads were subjected to reducing treatment at 800°C for 9 hours in a gas flow containing hydrogen and argon at a volume ratio of 20/80, thereby obtaining a catalyst. It was confirmed that the nickel content in the resultant catalyst was 10.21% by weight (molar ratio: Ni/(Al + Ni) = 0.09); the fine metallic nickel particles had a particle size of 48 nm; the obtained catalyst had a silicon (Si) content of 0% by weight and a nitrogen (N) concentration of 126 ppm; and the spherical beads having a diameter of 3 mm had an average strength of 7 kg.

Comparative Example 4:

α-alumina particles were molded into spherical beads having a diameter of 2.5 mm. The obtained spherical beads were calcined in air at 1200°C for 5 hours. The calcined beads were sprayed and coated with 1000 mL of a solution prepared by dissolving 212.2 g of $RuCl_3$ in pure water, dried and then calcined again in air at 580°C for 5 hours. Further, the beads were subjected to reducing treatment at 540°C for 3 hours in a gas flow containing hydrogen and argon at a volume ratio of 20/80, thereby obtaining a catalyst. It was confirmed that the ruthenium content in the resultant catalyst was 9.015% by weight (molar ratio: Ru/($\alpha$-$Al_2O_3$ + Ru) = 0.048); the fine metallic ruthenium particles had a particle size of 15 nm; the obtained catalyst had a silicon (Si) content of 0% by weight and a chlorine (Cl) concentration of 315 ppm; and the spherical beads having a diameter of 3 mm had an average strength of 8 kg.

## Table 1

| Examples | Composition of catalyst | Si content (wt%) | Raw material |
|---|---|---|---|
| Example 1 | Ni/(Mg+Al+Ni+Si): 0.156 mol (Ni: 20.39 wt%) | 1.952 | Sulfate |
| Example 2 | Ni/(Mg+Al+Ni+Si): 0.314 mol (Ni: 39.98 wt%) | 9.911 | Chloride |
| Example 3 | Ni/(Mg+Al+Ni+Si): 0.001 mol (Ni: 0.182 wt%) | 1.046 | Chloride |
| Example 4 | Ni/(Mg+Al+Ni+Si): 0.115 mol (Ni: 15.39 wt%) | 4.913 | Sulfate |
| Example 5 | Ni/(Mg+Al+Ni+Si): 0.236 mol (Ni: 29.59 wt%) | 0.352 | Sulfate |
| Example 6 | Ni/(Mg+Al+Ni+Si): 0.035 mol (Ni: 5.261 wt%) | 19.51 | Chloride |
| Example 7 | Ni/(Mg+Al+Ni+Si): 0.078 mol (Ni: 10.89 wt%) | 13.03 | Nitrate |
| Example 8 | Ni/(Mg+Al+Ni+Si): 0.016 mol (Ni: 2.231 wt%) | 2.002 | Sulfate |
| Example 9 | Ni/(Mg+Al+Ni+Si): 0.251 mol (Ni: 32.58 wt%) | 7.087 | Chloride |

## Table 1 (continued)

| Examples | Impurities | | Chemical solution washing method | | Strength (kg) |
|---|---|---|---|---|---|
| | Kind | Residual amount | Chemical solution used | Amount of chemical solution used (L/kg) | |
| Example 1 | S | 0.5 | 1N-NaOH | 25 | 38 |
| Example 2 | Cl | 89 | 1N-NH$_3$ | 34 | 41 |
| Example 3 | Cl | 73 | 0.2N-NH$_3$ | 12 | 32 |
| Example 4 | S | 0.2 | 9.7N-NaOH | 98 | 25 |
| Example 5 | S | 0.3 | 4.1N-NaOH 2.2N-Na$_2$CO$_3$ | 42 | 33 |
| Example 6 | Cl | 91 | 2.2N-NaOH 0.1N-NH$_3$ | 21 | 28 |
| Example 7 | N | 88 | 6.8N-NaOH 4.5N-NH$_3$ | 62 | 37 |
| Example 8 | S | 0.2 | 2.4N-Na$_2$CO$_3$ 7.2N-NH$_3$ | 37 | 40 |
| Example 9 | Cl | 68 | 4.6N-NH$_3$ | 45 | 38 |

Table 1 (continued)

| Examples | Composition of catalyst | Si content (wt%) | Raw material |
|---|---|---|---|
| Example 10 | Ni/(Mg+Al+Ni+Si): 0.004 mol (Ni: 0.579 wt%) | 16.63 | Chloride |
| Example 11 | Ni/(Mg+Al+Ni+Si): 0.062 mol (Ni: 8.201 wt%) | 0.042 | Nitrate |
| Example 12 | Ni/(Mg+Al+Ni+Si): 0.126 mol (Ni: 16.43 wt%) | 0.003 | Sulfate |
| Example 13 | Ni/(Mg+Al+Ni+Si): 0.218 mol (Ni: 27.83 wt%) | 4.441 | Sulfate |
| Example 14 | Ni/(Mg+Al+Ni+Si+Pd): 0.172 mol (Ni: 23.19 wt%) | 8.879 | Sulfate |
| Example 15 | Ni/(Mg+Al+Ni+Si+Mn): 0.083 mol (Ni: 11.02 wt%) | 3.516 | Nitrate |
| Example 16 | Ni/(Mg+Al+Ni+Si+Pt): 0.156 mol (Ni: 20.25 wt%) | 1.938 | Same as used in Example 1 |
| Example 17 | Ni/(Mg+Al+Ni+Si+Rh+Cu): 0.154 mol (Ni: 19.77 wt%) | 1.892 | Same as used in Example 1 |
| Example 18 | Ni/(Mg+Al+Ni+Si+Ag+V): 0.155 mol (Ni: 20.01 wt%) | 1.92 | Same as used in Example 1 |

## Table 1 (continued)

| Examples | Impurities | | Chemical solution washing method | | Strength (kg) |
|---|---|---|---|---|---|
| | Kind | Residual amount | Chemical solution used | Amount of chemical solution (L/kg) | |
| Example 10 | Cl | 82 | 3.2N-NaOH | 76 | 35 |
| Example 11 | N | 324 | 3.5N-NaOH | 34 | 24 |
| Example 12 | S | 186 | 2.5N-NaOH 1.4N-$Na_2CO_3$ | 18 | 18 |
| Example 13 | S | 547 | 7.2N-$Na_2CO_3$ | 11 | 32 |
| Example 14 | S | 122 | 1.5N-NaOH | 18 | 24 |
| Example 15 | N | 82 | 2.4N-NaOH | 24 | 31 |
| Example 16 Example 17 Example 18 | Same as used in Example 1 | | | | |

Table 1 (continued)

| Comparative Examples | Composition of catalyst | Si content (wt%) | Raw material |
|---|---|---|---|
| Comparative Example 1 | Ni/(Mg+Al+Ni): 0.091 mol (Ni: 12.28 wt%) | 0 | Sulfate |
| Comparative Example 2 | Ni/(Mg+Al+Ni): 0.146 mol (Ni: 18.84 wt%) | 0 | Sulfate |
| Comparative Example 3 | Ni/(Al+Ni): 0.091 mol (Ni: 10.2 wt%) | 0 | Nitrate |
| Comparative Example 4 | Ru/(Al+Ru): 0.046 mol (Ni: 9.015 wt%) | 0 | Chloride |

Table 1 (continued)

| Comparative Examples | Impurities | | Chemical solution washing method | | Strength (kg) |
|---|---|---|---|---|---|
| | Kind | Residual amount | Chemical solution used | Amount of chemical solution (L/kg) | |
| Comparative Example 1 | S | 0.7 | 3.1N-NaOH | 41 | 11 |
| Comparative Example 2 | S | 1063 | - | - | 9 |
| Comparative Example 3 | N | 126 | - | - | 7 |
| Comparative Example 4 | Cl | 315 | - | - | 8 |

## Table 2

| Examples | Composition of catalyst | Si content (wt%) | Reaction temperature (°C) |
|---|---|---|---|
| Example 1 | Ni/(Mg+Al+Ni+Si): 0.156 mol (Ni: 20.39 wt%) | 1.952 | 300 |
| | | | 400 |
| | | | 500 |
| | | | 600 |
| Example 2 | Ni/(Mg+Al+Ni+Si): 0.314 mol (Ni: 39.98 wt%) | 9.911 | 300 |
| | | | 400 |
| | | | 500 |
| | | | 600 |
| Example 3 | Ni/(Mg+Al+Ni+Si): 0.001 mol (Ni: 0.182 wt%) | 1.046 | 300 |
| | | | 400 |
| | | | 500 |
| | | | 600 |
| Example 4 | Ni/(Mg+Al+Ni+Si): 0.115 mol (Ni: 15.39 wt%) | 4.913 | 300 |
| | | | 400 |
| | | | 500 |
| | | | 600 |
| Example 5 | Ni/(Mg+Al+Ni+Si): 0.236 mol (Ni: 29.59 wt%) | 0.352 | 300 |
| | | | 400 |
| | | | 500 |
| | | | 600 |
| Example 6 | Ni/(Mg+Al+Ni+Si): 0.035 mol (Ni: 5.261 wt%) | 19.51 | 300 |
| | | | 400 |
| | | | 500 |
| | | | 600 |
| Example 7 | Ni/(Mg+Al+Ni+Si): 0.078 mol (Ni: 10.89 wt%) | 13.03 | 300 |
| | | | 400 |
| | | | 500 |
| | | | 600 |
| Example 8 | Ni/(Mg+Al+Ni+Si): 0.016 mol (Ni: 2.231 wt%) | 2.002 | 300 |
| | | | 400 |
| | | | 500 |
| | | | 600 |
| Example 9 | Ni/(Mg+Al+Ni+Si): 0.251 mol (Ni: 32.58 wt%) | 7.087 | 300 |
| | | | 400 |
| | | | 500 |
| | | | 600 |

## Table 2 (continued)

| Examples | Propane Conversion (%) | | Butane Conversion (%) | | City gas 13A Conversion (%) | |
|---|---|---|---|---|---|---|
| | $C_3H_8$ | $C_n$ | $C_4H_{10}$ | $C_n$ | 13A | $C_n$ |
| Example 1 | 99.8 | 21 | 99.7 | 22.5 | 99.8 | 6.8 |
| | 99.9 | 31.8 | 99.9 | 33.5 | 100 | 19.7 |
| | 100 | 52.9 | 100 | 54.2 | 100 | 43.5 |
| | 100 | 82.1 | 100 | 82.7 | 100 | 76.7 |
| Example 2 | 99.7 | 20.8 | 99.9 | 22.4 | 99.9 | 6.2 |
| | 100 | 31.7 | 100 | 33.3 | 100 | 19.5 |
| | 100 | 52.7 | 100 | 54.1 | 100 | 43.4 |
| | 100 | 81.9 | 100 | 82.4 | 100 | 76.6 |
| Example 3 | 99.6 | 21.1 | 99.7 | 22.1 | 100 | 6.1 |
| | 99.9 | 31.9 | 99.8 | 33.1 | 100 | 19.6 |
| | 100 | 52.7 | 100 | 53.8 | 100 | 43.3 |
| | 100 | 81.9 | 100 | 82.1 | 100 | 76.4 |
| Example 4 | 99.9 | 20.7 | 99.8 | 22.2 | 99.8 | 6.3 |
| | 100 | 31.6 | 100 | 33.4 | 100 | 19.3 |
| | 100 | 52.5 | 100 | 53.8 | 100 | 43.4 |
| | 100 | 81.4 | 100 | 81.9 | 100 | 76.6 |
| Example 5 | 100 | 20.6 | 99.9 | 22.3 | 99.7 | 6.5 |
| | 100 | 31.7 | 100 | 33.2 | 99.9 | 19.6 |
| | 100 | 52.6 | 100 | 54.1 | 100 | 43.5 |
| | 100 | 81.6 | 100 | 82.3 | 100 | 76.7 |
| Example 6 | 99.8 | 20.9 | 99.7 | 21.9 | 99.9 | 6.6 |
| | 99.6 | 31.5 | 100 | 33.1 | 100 | 19.6 |
| | 100 | 52.5 | 100 | 54.2 | 100 | 43.4 |
| | 100 | 81.5 | 100 | 82.6 | 100 | 76.5 |
| Example 7 | 99.8 | 21.1 | 100 | 22.4 | 100 | 6.4 |
| | 99.9 | 31.2 | 100 | 33.5 | 100 | 19.5 |
| | 100 | 52.3 | 100 | 53.9 | 100 | 43.4 |
| | 100 | 81.2 | 100 | 82.4 | 100 | 76.5 |
| Example 8 | 99.8 | 20.7 | 99.9 | 22.1 | 99.8 | 6.8 |
| | 100 | 31.8 | 100 | 33.4 | 99.9 | 19.5 |
| | 100 | 52.4 | 100 | 54.1 | 100 | 43.2 |
| | 100 | 81.9 | 100 | 82.5 | 100 | 76.7 |
| Example 9 | 100 | 20.8 | 99.7 | 22.2 | 99.7 | 6.9 |
| | 100 | 31.5 | 99.8 | 33.4 | 99.9 | 19.4 |
| | 100 | 52.9 | 100 | 54.2 | 100 | 43.4 |
| | 100 | 81.6 | 100 | 82.4 | 100 | 76.6 |

## Table 2 (continued)

| Examples | Composition of catalyst | Si content (wt%) | Reaction temperature (°C) |
|---|---|---|---|
| Example 10 | Ni/(Mg+Al+Ni+Si): 0.004 mol (Ni: 0.579 wt%) | 16.63 | 300 |
| | | | 400 |
| | | | 500 |
| | | | 600 |
| Example 11 | Ni/(Mg+Al+Ni+Si): 0.062 mol (Ni: 8.201 wt%) | 0.042 | 300 |
| | | | 400 |
| | | | 500 |
| | | | 600 |
| Example 12 | Ni/(Mg+Al+Ni+Si): 0.126 mol (Ni: 16.43 wt%) | 0.003 | 300 |
| | | | 400 |
| | | | 500 |
| | | | 600 |
| Example 13 | Ni/(Mg+Al+Ni+Si): 0.218 mol (Ni: 27.83 wt%) | 4.441 | 300 |
| | | | 400 |
| | | | 500 |
| | | | 600 |
| Example 14 | Ni/(Mg+Al+Ni+Si+Pd): 0.172 mol (Ni: 23.19 wt%) | 8.879 | 300 |
| | | | 400 |
| | | | 500 |
| | | | 600 |
| Example 15 | Ni/(Mg+Al+Ni+Si+Mn): 0.083 mol (Ni: 11.02 wt%) | 3.516 | 300 |
| | | | 400 |
| | | | 500 |
| | | | 600 |
| Example 16 | Ni/(Mg+Al+Ni+Si+Pt): 0.156 mol (Ni: 20.25 wt%) | 1.938 | 300 |
| | | | 400 |
| | | | 500 |
| | | | 600 |
| Example 17 | Ni/(Mg+Al+Ni+Si+Rh+Cu): 0.154 mol (Ni: 19.77 wt%) | 1.892 | 300 |
| | | | 400 |
| | | | 500 |
| | | | 600 |
| Example 18 | Ni/(Mg+Al+Ni+Si+Ag+V): 0.155 mol (Ni: 20.01 wt%) | 1.92 | 300 |
| | | | 400 |
| | | | 500 |
| | | | 600 |

## Table 2 (continued)

| Examples | Propane Conversion (%) | | Butane Conversion (%) | | City gas 13A Conversion (%) | |
|---|---|---|---|---|---|---|
| | $C_3H_8$ | $C_n$ | $C_4H_{10}$ | $C_n$ | 13A | $C_n$ |
| Example 10 | 99.9 | 20.5 | 99.6 | 22.3 | 99.8 | 6.5 |
| | 100 | 31.1 | 100 | 33.5 | 100 | 19.5 |
| | 100 | 51.8 | 100 | 54.2 | 100 | 43.5 |
| | 100 | 82.4 | 100 | 82.5 | 100 | 76.6 |
| Example 11 | 99.7 | 19.8 | 99.6 | 22.1 | 99.8 | 6.3 |
| | 99.9 | 30.8 | 99.8 | 33.3 | 100 | 18.9 |
| | 100 | 51.9 | 100 | 53.9 | 100 | 43.2 |
| | 100 | 81.2 | 100 | 82.4 | 100 | 76.5 |
| Example 12 | 99.5 | 20.2 | 99.9 | 21.8 | 99.9 | 6.8 |
| | 99.6 | 31.6 | 100 | 32.9 | 100 | 19.2 |
| | 100 | 52.1 | 100 | 53.6 | 100 | 43.5 |
| | 100 | 81.1 | 100 | 81.8 | 100 | 76.6 |
| Example 13. | 99.3 | 19.2 | 99.6 | 22.2 | 99.7 | 6.2 |
| | 99.5 | 30.4 | 99.8 | 32.5 | 100 | 18.9 |
| | 100 | 50.8 | 100 | 54.1 | 100 | 43.1 |
| | 100 | 80.4 | 100 | 82.6 | 100 | 76.2 |
| Example 14 | 99.2 | 20.2 | 99.5 | 22.1 | 99.8 | 6.2 |
| | 99.4 | 31.2 | 99.9 | 32.4 | 100 | 19.1 |
| | 100 | 50.9 | 100 | 53.8 | 100 | 43.4 |
| | 100 | 81.2 | 100 | 82.3 | 100 | 76.5 |
| Example 15 | 99.8 | 20.4 | 99.6 | 22.6 | 99.5 | 6.8 |
| | 100 | 31.5 | 99.8 | 32.8 | 99.9 | 19.2 |
| | 100 | 52.2 | 100 | 54.3 | 100 | 43.3 |
| | 100 | 81.6 | 100 | 82.2 | 100 | 76.6 |
| Example 16 | 99.9 | 20.9 | 99.7 | 21.9 | 99.5 | 6.2 |
| | 100 | 31.5 | 99.9 | 33.4 | 99.9 | 19.4 |
| | 100 | 52.1 | 100 | 54.1 | 100 | 43.5 |
| | 100 | 80.9 | 100 | 81.6 | 100 | 76.2 |
| Example 17 | 99.5 | 19.9 | 99.9 | 21.8 | 99.6 | 6.7 |
| | 99.9 | 30.7 | 100 | 33.3 | 99.9 | 18.9 |
| | 100 | 52.2 | 100 | 53.9 | 100 | 43.2 |
| | 100 | 81.3 | 100 | 82.6 | 100 | 76.4 |
| Example 18 | 99.8 | 20.2 | 99.8 | 22.3 | 99.9 | 6.8 |
| | 99.9 | 31.3 | 100 | 32.7 | 100 | 19.3 |
| | 100 | 50.7 | 100 | 53.7 | 100 | 43.2 |
| | 100 | 81.5 | 100 | 81.1 | 100 | 76.7 |

## Table 3

| Comparative Examples | Composition of catalyst | Si content (wt%) | Reaction temperature (°C) |
|---|---|---|---|
| Comparative Example 1 | Ni/(Mg+Al+Ni): 0.091 mol (Ni: 12.28 wt%) | 0 | 300 |
| | | | 400 |
| | | | 500 |
| | | | 600 |
| Comparative Example 2 | Ni/(Mg+Al+Ni): 0.146 mol (Ni: 18.84 wt%) | 0 | 300 |
| | | | 400 |
| | | | 500 |
| | | | 600 |
| Comparative Example 3 | Ni/(Al+Ni): 0.091 mol (Ni: 10.2 wt%) | 0 | 300 |
| | | | 400 |
| | | | 500 |
| | | | 600 |
| Comparative Example 4 | Ru/(Al+Ru): 0.046 mol (Ni: 9.015 wt%) | 0 | 300 |
| | | | 400 |
| | | | 500 |
| | | | 600 |

## Table 3 (continued)

| Comparative Examples | Propane Conversion (%) | | Butane Conversion (%) | | City gas 13A Conversion (%) | |
|---|---|---|---|---|---|---|
| | $C_3H_8$ | $C_n$ | $C_4H_{10}$ | $C_n$ | 13A | $C_n$ |
| Comparative Example 1 | 81.5 | 16.8 | 82.5 | 15.2 | 81.8 | 3.2 |
| | 84.2 | 27.2 | 85.1 | 28.9 | 84.8 | 12.8 |
| | 86.4 | 42.7 | 87.3 | 43.1 | 87.1 | 35.4 |
| | 92.1 | 64.1 | 92.9 | 65.8 | 92.4 | 65.8 |
| Comparative Example 2 | 28.2 | 7.2 | 27.8 | 7.8 | 25.4 | 1.4 |
| | 35.1 | 18.8 | 34.6 | 19.8 | 35.9 | 8.8 |
| | 42.8 | 34.5 | 45.4 | 35.4 | 43.5 | 29.5 |
| | 55.6 | 51.1 | 60.2 | 52.1 | 61.4 | 51.2 |
| Comparative Example 3 | 21.2 | 8.9 | 19.8 | 10.2 | 20.8 | 2.5 |
| | 32.8 | 19.2 | 30.5 | 20.4 | 31.8 | 11.2 |
| | 41.9 | 40.8 | 38.2 | 41.8 | 42.5 | 31.4 |
| | 58.4 | 55.2 | 51.8 | 52.1 | 55.1 | 49.2 |
| Comparative Example 4 | 25.6 | 11.5 | 23.4 | 11.2 | 21.4 | 2.8 |
| | 35.7 | 18.2 | 31.8 | 23.4 | 36.5 | 12.5 |
| | 46.9 | 41.6 | 41.9 | 42.5 | 44.4 | 36.2 |
| | 60.1 | 53.2 | 62.4 | 53.4 | 56.4 | 48.2 |

Table 4

| Examples | Composition of catalyst | Si content (wt%) | Reaction time (hr) |
|---|---|---|---|
| Example 1 | Ni/(Mg+Al+Ni+Si): 0.156 mol (Ni: 20.39 wt%) | 1.952 | 24 |
| | | | 200 |
| | | | 350 |
| Example 2 | Ni/(Mg+Al+Ni+Si): 0.314 mol (Ni: 39.98 wt%) | 9.911 | 24 |
| | | | 200 |
| | | | 350 |
| Example 3 | Ni/(Mg+Al+Ni+Si): 0.001 mol (Ni: 0.182 wt%) | 1.046 | 24 |
| | | | 200 |
| | | | 350 |
| Example 4 | Ni/(Mg+Al+Ni+Si): 0.115 mol (Ni: 15.39 wt%) | 4.913 | 24 |
| | | | 200 |
| | | | 350 |
| Example 5 | Ni/(Mg+Al+Ni+Si): 0.236 mol (Ni: 29.59 wt%) | 0.352 | 24 |
| | | | 200 |
| | | | 350 |
| Example 6 | Ni/(Mg+Al+Ni+Si): 0.035 mol (Ni: 5.261 wt%) | 19.51 | 24 |
| | | | 200 |
| | | | 350 |
| Example 7 | Ni/(Mg+Al+Ni+Si): 0.078 mol (Ni: 10.89 wt%) | 13.03 | 24 |
| | | | 200 |
| | | | 350 |
| Example 8 | Ni/(Mg+Al+Ni+Si): 0.016 mol (Ni: 2.231 wt%) | 2.002 | 24 |
| | | | 200 |
| | | | 350 |
| Example 9 | Ni/(Mg+Al+Ni+Si): 0.251 mol (Ni: 32.58 wt%) | 7.087 | 24 |
| | | | 200 |
| | | | 350 |

## Table 4 (continued)

| Examples | S/C = 1.5 | | S/C = 3.0 | |
|---|---|---|---|---|
| | Conversion (%) | | Conversion (%) | |
| | $C_3H_8$ | $C_n$ | $C_3H_8$ | $C_n$ |
| Example 1 | 99.8 | 59.2 | 99.9 | 82.1 |
| | 99.9 | 59.1 | 100 | 82.1 |
| | 100 | 59.3 | 99.8 | 82 |
| Example 2 | 99.7 | 58.9 | 100 | 82.3 |
| | 99.9 | 59.1 | 100 | 82.4 |
| | 100 | 59.2 | 99.9 | 82.1 |
| Example 3 | 100 | 59.1 | 99.9 | 82.3 |
| | 99.6 | 59.1 | 99.8 | 82.1 |
| | 99.8 | 59.2 | 100 | 82 |
| Example 4 | 100 | 59.3 | 99.8 | 82 |
| | 100 | 59.3 | 100 | 82.2 |
| | 99.9 | 59 | 100 | 82.4 |
| Example 5 | 99.7 | 59 | 100 | 82.3 |
| | 99.8 | 59.5 | 100 | 82.4 |
| | 99.9 | 59.4 | 100 | 82.5 |
| Example 6 | 100 | 59.3 | 99.7 | 81.9 |
| | 100 | 59.2 | 99.9 | 81.8 |
| | 100 | 59.1 | 100 | 82.3 |
| Example 7 | 99.6 | 59.1 | 99.8 | 81.8 |
| | 99.9 | 59.2 | 99.6 | 82.3 |
| | 100 | 59.2 | 100 | 81.9 |
| Example 8 | 99.8 | 59.4 | 100 | 81.9 |
| | 99.9 | 59.3 | 99.8 | 82.3 |
| | 100 | 59.3 | 99.7 | 82.1 |
| Example 9 | 99.6 | 59.1 | 100 | 82.4 |
| | 99.8 | 59.1 | 99.9 | 82.3 |
| | 100 | 59.2 | 100 | 82.1 |

## Table 4 (continued)

| Examples | Composition of catalyst | Si content (wt%) | Reaction time (hr) |
|---|---|---|---|
| Example 10 | Ni/(Mg+Al+Ni+Si): 0.004 mol (Ni: 0.579 wt%) | 16.63 | 24 |
| | | | 200 |
| | | | 350 |
| Example 11 | Ni/(Mg+Al+Ni+Si): 0.062 mol (Ni: 8.201 wt%) | 0.042 | 24 |
| | | | 200 |
| | | | 350 |
| Example 12 | Ni/(Mg+Al+Ni+Si): 0.126 mol (Ni: 16.43 wt%) | 0.003 | 24 |
| | | | 200 |
| | | | 350 |
| Example 13 | Ni/(Mg+Al+Ni+Si): 0.218 mol (Ni: 27.83 wt%) | 4.441 | 24 |
| | | | 200 |
| | | | 350 |
| Example 14 | Ni/(Mg+Al+Ni+Si+Pd): 0.172 mol (Ni: 23.19 wt%) | 8.879 | 24 |
| | | | 200 |
| | | | 350 |
| Example 15 | Ni/(Mg+Al+Ni+Si+Mn): 0.083 mol (Ni: 11.02 wt%) | 3.516 | 24 |
| | | | 200 |
| | | | 350 |
| Example 16 | Ni/(Mg+Al+Ni+Si+Pt): 0.156 mol (Ni: 20.25 wt%) | 1.938 | 24 |
| | | | 200 |
| | | | 350 |
| Example 17 | Ni/(Mg+Al+Ni+Si+Rh+Cu): 0.154 mol (Ni: 19.77 wt%) | 1.892 | 24 |
| | | | 200 |
| | | | 350 |
| Example 18 | Ni/(Mg+Al+Ni+Si+Ag+V): 0.155 mol (Ni: 20.01 wt%) | 1.92 | 24 |
| | | | 200 |
| | | | 350 |

Table 4 (continued)

| Examples | S/C = 1.5 | | S/C = 3.0 | |
|---|---|---|---|---|
| | Conversion (%) | | Conversion (%) | |
| | $C_3H_8$ | $C_n$ | $C_3H_8$ | $C_n$ |
| Example 10 | 99.7 | 59.3 | 99.8 | 81.9 |
| | 99.9 | 59.2 | 99.9 | 82.1 |
| | 100 | 59.2 | 99.9 | 81.8 |
| Example 11 | 100 | 59.3 | 99.8 | 82.1 |
| | 100 | 59.2 | 100 | 81.9 |
| | 99.8 | 59.3 | 100 | 82 |
| Example 12 | 99.6 | 59.4 | 100 | 82.3 |
| | 100 | 59.2 | 100 | 81.9 |
| | 99.8 | 59.3 | 99.9 | 82.2 |
| Example 13 | 100 | 59.2 | 100 | 81.9 |
| | 99.8 | 59.4 | 100 | 82.2 |
| | 99.5 | 59.1 | 100 | 82.2 |
| Example 14 | 100 | 59.3 | 99.8 | 81.9 |
| | 100 | 59.5 | 100 | 81.8 |
| | 99.9 | 59.1 | 100 | 82.1 |
| Example 15 | 100 | 59.4 | 99.8 | 82.2 |
| | 99.5 | 59.2 | 99.9 | 82.3 |
| | 99.8 | 59.5 | 100 | 82.4 |
| Example 16 | 99.8 | 59.3 | 100 | 81.9 |
| | 99.9 | 59.2 | 100 | 82.2 |
| | 100 | 59.1 | 100 | 82.4 |
| Example 17 | 100 | 59.1 | 99.9 | 82.2 |
| | 100 | 59.4 | 100 | 82.2 |
| | 100 | 59.2 | 99.8 | 82.4 |
| Example 18 | 99.8 | 59.3 | 100 | 82.1 |
| | 100 | 59.4 | 100 | 82.3 |
| | 99.9 | 59.2 | 99.9 | 82.5 |

Table 4 (continued)

| Comparative Examples | Composition of catalyst | Si content (wt%) | Reaction time (hr) |
|---|---|---|---|
| Comparative Example 1 | Ni/(Mg+Al+Ni): 0.091 mol (Ni: 12.28 wt%) | 0 | 24 |
| | | | 200 |
| | | | 350 |
| Comparative Example 2 | Ni/(Mg+Al+Ni): 0.146 mol (Ni: 18.84 wt%) | 0 | 24 |
| | | | 200 |
| | | | 350 |
| Comparative Example 3 | Ni/(Al+Ni): 0.091 mol (Ni: 10.2 wt%) | 0 | 24 |
| | | | 200 |
| | | | 350 |
| Comparative Example 4 | Ru/(Al+Ru): 0.046 mol (Ni: 9.015 wt%) | 0 | 24 |
| | | | 200 |
| | | | 350 |

Table 4 (continued)

| Comparative Examples | S/C = 1.5 Conversion (%) | | S/C = 3.0 Conversion (%) | |
|---|---|---|---|---|
| | $C_3H_8$ | $C_n$ | $C_3H_8$ | $C_n$ |
| Comparative Example 1 | 91.9 | 55.7 | 92.1 | 75.2 |
| | 83.2 | 48.2 | 85.2 | 64.5 |
| | 71.4 | 35.4 | 74.5 | 55.8 |
| Comparative Example 2 | 43.1 | 46.2 | 55.4 | 59.3 |
| | 28.9 | 38.1 | 41.8 | 45.2 |
| | 21.5 | 29.4 | 28.7 | 38.4 |
| Comparative Example 3 | 55.3 | 44.3 | 58.9 | 57.2 |
| | 31.5 | 31.5 | 34.2 | 28.4 |
| | 15.4 | 14.3 | 19.5 | 12.4 |
| Comparative Example 4 | 60.4 | 48.9 | 61.8 | 55.4 |
| | 33.9 | 35.7 | 37.2 | 31.2 |
| | 12.8 | 17.7 | 13.7 | 13.4 |

## Table 5

| Examples | Composition of catalyst | Si content (wt%) | Reaction time (hr) |
|---|---|---|---|
| Example 1 | Ni/(Mg+Al+Ni+Si): 0.156 mol (Ni: 20.39 wt%) | 1.952 | 0 |
| | | | 150 |
| | | | 350 |
| Example 2 | Ni/(Mg+Al+Ni+Si): 0.314 mol (Ni: 39.98 wt%) | 9.911 | 24 |
| | | | 200 |
| | | | 350 |
| Example 3 | Ni/(Mg+Al+Ni+Si): 0.001 mol (Ni: 0.182 wt%) | 1.046 | 24 |
| | | | 200 |
| | | | 350 |
| Example 4 | Ni/(Mg+Al+Ni+Si): 0.115 mol (Ni: 15.39 wt%) | 4.913 | 24 |
| | | | 200 |
| | | | 350 |
| Example 5 | Ni/(Mg+Al+Ni+Si): 0.236 mol (Ni: 29.59 wt%) | 0.352 | 24 |
| | | | 200 |
| | | | 350 |
| Example 6 | Ni/(Mg+Al+Ni+Si): 0.035 mol (Ni: 5.261 wt%) | 19.51 | 24 |
| | | | 200 |
| | | | 350 |
| Example 7 | Ni/(Mg+Al+Ni+Si): 0.078 mol (Ni: 10.89 wt%) | 13.03 | 24 |
| | | | 200 |
| | | | 350 |
| Example 8 | Ni/(Mg+Al+Ni+Si): 0.016 mol (Ni: 2.231 wt%) | 2.002 | 24 |
| | | | 200 |
| | | | 350 |
| Example 9 | Ni/(Mg+Al+Ni+Si): 0.251 mol (Ni: 32.58 wt%) | 7.087 | 24 |
| | | | 200 |
| | | | 350 |

## Table 5 (continued)

| Examples | S/C = 1.5 | | Amount of carbon precipitated (wt%) | Strength (kg) |
|---|---|---|---|---|
| | Conversion (%) | | | |
| | $C_3H_8$ | $C_n$ | | |
| Example 1 | 99.8 | 59.2 | 0.03 | 37 |
| | 99.9 | 59.1 | 0.08 | 35 |
| | 100 | 59.3 | 0.11 | 38 |
| Example 2 | 99.7 | 58.9 | 0.04 | 40 |
| | 99.9 | 59.1 | 0.09 | 37 |
| | 100 | 59.2 | 0.1 | 38 |
| Example 3 | 100 | 59.1 | 0.02 | 33 |
| | 99.6 | 59.1 | 0.05 | 31 |
| | 99.8 | 59.2 | 0.12 | 32 |
| Example 4 | 100 | 59.3 | 0.02 | 24 |
| | 100 | 59.3 | 0.05 | 27 |
| | 99.9 | 59 | 0.08 | 26 |
| Example 5 | 99.7 | 59 | 0.03 | 31 |
| | 99.8 | 59.5 | 0.05 | 33 |
| | 99.9 | 59.4 | 0.09 | 30 |
| Example 6 | 100 | 59.3 | 0.04 | 27 |
| | 100 | 59.2 | 0.08 | 29 |
| | 100 | 59.1 | 0.11 | 26 |
| Example 7 | 99.6 | 59.1 | 0.02 | 34 |
| | 99.9 | 59.2 | 0.03 | 31 |
| | 100 | 59.2 | 0.08 | 36 |
| Example 8 | 99.8 | 59.4 | 0.03 | 38 |
| | 99.9 | 59.3 | 0.09 | 40 |
| | 100 | 59.3 | 0.12 | 37 |
| Example 9 | 99.6 | 59.1 | 0.04 | 34 |
| | 99.8 | 59.1 | 0.08 | 37 |
| | 100 | 59.2 | 0.11 | 36 |

## Table 5 (continued)

| Examples | Composition of catalyst | Si content (wt%) | Reaction time (hr) |
|---|---|---|---|
| Example 10 | Ni/(Mg+Al+Ni+Si): 0.004 mol (Ni: 0.579 wt%) | 16.63 | 24 |
| | | | 200 |
| | | | 350 |
| Example 11 | Ni/(Mg+Al+Ni+Si): 0.062 mol (Ni: 8.201 wt%) | 0.042 | 24 |
| | | | 200 |
| | | | 350 |
| Example 12 | Ni/(Mg+Al+Ni+Si): 0.126 mol (Ni: 16.43 wt%) | 0.003 | 24 |
| | | | 200 |
| | | | 350 |
| Example 13 | Ni/(Mg+Al+Ni+Si): 0.218 mol (Ni: 27.83 wt%) | 4.441 | 24 |
| | | | 200 |
| | | | 350 |
| Example 14 | Ni/(Mg+Al+Ni+Si+Pd): 0.172 mol (Ni: 23.19 wt%) | 8.879 | 24 |
| | | | 200 |
| | | | 350 |
| Example 15 | Ni/(Mg+Al+Ni+Si+Mn): 0.083 mol (Ni: 11.02 wt%) | 3.516 | 24 |
| | | | 200 |
| | | | 350 |
| Example 16 | Ni/(Mg+Al+Ni+Si+Pt): 0.156 mol (Ni: 20.25 wt%) | 1.938 | 24 |
| | | | 200 |
| | | | 350 |
| Example 17 | Ni/(Mg+Al+Ni+Si+Rh+Cu): 0.154 mol (Ni: 19.77 wt%) | 1.892 | 24 |
| | | | 200 |
| | | | 350 |
| Example 18 | Ni/(Mg+Al+Ni+Si+Ag+V): 0.155 mol (Ni: 20.01 wt%) | 1.92 | 24 |
| | | | 200 |
| | | | 350 |

## Table 5 (continued)

| Examples | S/C = 1.5 | | Amount of carbon precipitated (wt%) | Strength (kg) |
| | Conversion (%) | | | |
| | $C_3H_8$ | $C_n$ | | |
|---|---|---|---|---|
| Example 10 | 99.7 | 59.3 | 0.02 | 34 |
| | 99.9 | 59.2 | 0.07 | 31 |
| | 100 | 59.2 | 0.09 | 32 |
| Example 11 | 100 | 59.3 | 0.01 | 24 |
| | 100 | 59.2 | 0.03 | 22 |
| | 99.8 | 59.3 | 0.08 | 20 |
| Example 12 | 99.6 | 59.4 | 0.02 | 18 |
| | 100 | 59.2 | 0.03 | 16 |
| | 99.8 | 59.3 | 0.05 | 15 |
| Example 13 | 100 | 59.2 | 0.03 | 32 |
| | 99.8 | 59.4 | 0.09 | 31 |
| | 99.5 | 59.1 | 0.15 | 33 |
| Example 14 | 99.9 | 59.2 | 0.01 | 24 |
| | 99.8 | 59.1 | 0.05 | 25 |
| | 100 | 59.4 | 0.08 | 21 |
| Example 15 | 100 | 59.3 | 0.03 | 31 |
| | 99.9 | 59.2 | 0.09 | 28 |
| | 99.9 | 59.1 | 0.11 | 25 |
| Example 16 | 99.7 | 59.4 | 0.02 | 35 |
| | 99.6 | 59.3 | 0.05 | 36 |
| | 100 | 59.2 | 0.09 | 34 |
| Example 17 | 99.9 | 59.1 | 0.01 | 37 |
| | 99.8 | 59.3 | 0.06 | 36 |
| | 99.5 | 59.1 | 0.12 | 34 |
| Example 18 | 100 | 59.2 | 0.02 | 36 |
| | 99.9 | 59.3 | 0.05 | 35 |
| | 99.8 | 59.1 | 0.12 | 36 |

## Table 5 (continued)

| Comparative Examples | Composition of catalyst | Si content (wt%) | Reaction time (hr) |
|---|---|---|---|
| Comparative Example 1 | Ni/(Mg+Al+Ni): 0.091 mol (Ni: 12.28 wt%) | 0 | 24 |
| | | | 200 |
| | | | 350 |
| Comparative Example 2 | Ni/(Mg+Al+Ni): 0.146 mol (Ni: 18.84 wt%) | 0 | 24 |
| | | | 200 |
| | | | 350 |
| Comparative Example 3 | Ni/(Al+Ni): 0.091 mol (Ni: 10.2 wt%) | 0 | 24 |
| | | | 200 |
| | | | 350 |
| Comparative Example 4 | Ru/(Al+Ru): 0.046 mol (Ni: 9.015 wt%) | 0 | 24 |
| | | | 200 |
| | | | 350 |

## Table 5 (continued)

| Comparative Examples | S/C = 1.5 | | Amount of carbon precipitated (wt%) | Strength (kg) |
|---|---|---|---|---|
| | Conversion (%) | | | |
| | $C_3H_8$ | $C_n$ | | |
| Comparative Example 1 | 91.9 | 55.7 | 3.89 | 9 |
| | 83.2 | 48.2 | 4.65 | 7 |
| | 71.4 | 35.4 | 7.81 | 5 |
| Comparative Example 2 | 43.1 | 46.2 | 3.12 | 8 |
| | 28.9 | 38.1 | 6.82 | 7 |
| | 21.5 | 29.4 | 9.16 | 5 |
| Comparative Example 3 | 55.3 | 44.3 | 4.54 | 9 |
| | 31.5 | 31.5 | 8.23 | 7 |
| | 15.4 | 14.3 | 9.65 | 3 |
| Comparative Example 4 | 60.4 | 48.9 | 2.12 | 10 |
| | 33.9 | 35.7 | 3.74 | 7 |
| | 12.8 | 17.7 | 4.31 | 4 |

## Table 6-1

| Example | Composition of catalyst | Si content (wt%) | Reaction time (hr) |
|---|---|---|---|
| Example 1 | Ni/(Mg+Al+Ni+Si): 0.156 mol (Ni: 20.39 wt%) | 1.952 | 24 |
| | | | 200 |
| | | | 350 |

## Table 6-1 (continued)

| Example | Low-temperature portion | | High-temperature portion | | | |
|---|---|---|---|---|---|---|
| | Conversion (%) | | Conversion (%) | | Amount of carbon precipitated (wt%) | Strength (kg) |
| | $C_3H_8$ | $C_n$ | $C_3H_8$ | $C_n$ | | |
| Example 1 | 99.9 | 52.8 | 100 | 96.8 | 0.002 | 35 |
| | 100 | 52.6 | 100 | 97.1 | 0.001 | 38 |
| | 100 | 52.9 | 100 | 96.5 | 0.002 | 37 |

Table 6-2

| Example | Composition of catalyst | Si content (wt%) | Reaction time (hr) |
|---|---|---|---|
| Example 1 | Ni/(Mg+Al+Ni+Si): 0.156 mol (Ni: 20.39 wt%) | 1.952 | 24 |
| | | | 200 |
| | | | 350 |

Table 6-2 (continued)

| Example | Low-temperature portion | | High-temperature portion | | | |
|---|---|---|---|---|---|---|
| | Conversion (%) | | Conversion (%) | | Amount of carbon precipitated (wt%) | Strength (kg) |
| | $C_4H_{10}$ | $C_n$ | $C_4H_{10}$ | $C_n$ | | |
| Example 1 | 99.8 | 54.2 | 100 | 97.2 | 0.001 | 34 |
| | 99.7 | 54.1 | 100 | 96.9 | 0.001 | 39 |
| | 100 | 53.8 | 100 | 97.1 | 0.002 | 33 |

## Table 6-3

| Example | Composition of catalyst | Si content (wt%) | Reaction time (hr) |
|---|---|---|---|
| Example 1 | Ni/(Mg+Al+Ni+Si): 0.156 mol (Ni: 20.39 wt%) | 1.952 | 24 |
| | | | 200 |
| | | | 350 |

## Table 6-3 (continued)

| Example | Low-temperature portion | | High-temperature portion | | | |
|---|---|---|---|---|---|---|
| | Conversion (%) | | Conversion (%) | | Amount of carbon | Strength (kg) |
| | 13A | $C_n$ | $C_4H_{10}$ | $C_n$ | precipitated (wt%) | |
| Example 1 | 100 | 43.5 | 100 | 97.1 | 0.001 | 36 |
| | 99.6 | 43.2 | 100 | 97 | 0.001 | 33 |
| | 100 | 43.4 | 100 | 96.7 | 0.001 | 35 |

Table 7-1

| Examples and Comparative Examples | Composition of catalyst | Si content (wt%) | Element added | |
|---|---|---|---|---|
| | | | Kind | (wt%) |
| Example 1 | Ni/(Mg+Al+Ni+Si): 0.156 mol (Ni: 20.39 wt%) | 1.952 | - | - |
| Example 14 | Ni/(Mg+Al+Ni+Si +Pd): 0.172 mol (Ni: 23.19 wt%) | 8.879 | Pd | 0.031 |
| Example 15 | Ni/(Mg+Al+Ni+Si +Mn): 0.083 mol (Ni: 11.02 wt%) | 3.516 | Mn | 5.032 |
| Example 16 | Ni/(Mg+Al+Ni+Si +Pt): 0.156 mol (Ni: 20.25 wt%) | 1.938 | Pt | 3.621 |
| Example 17 | Ni/(Mg+Al+Ni+Si +Rh+Cu): 0.154 mol (Ni: 19.77 wt%) | 1.892 | Rh<br>Cu | 9.821<br>5.824 |
| Example 18 | Ni/(Mg+Al+Ni+Si +Ag+V): 0.155 mol (Ni: 20.01 wt%) | 1.92 | Ag<br>V | 8.235<br>0.121 |
| Comparative Example 3 | Ni/(Al+Ni): 0.091 mol (Ni: 10.2 wt%) | 0 | - | - |
| Comparative Example 4 | Ru/(Al+Ru): 0.046 mol (Ni: 9.015 wt%) | 0 | - | - |

## Table 7-1 (continued)

| Examples and Comparative Examples | Reaction temperature (°C) | City gas 13A Conversion (%) | | Amount of ammonia by-produced (ppm) |
|---|---|---|---|---|
| | | 13A | $C_n$ | |
| Example 1 | 400 | 99.8 | 19.7 | <0.1 |
| | 500 | 100 | 43.5 | <0.1 |
| | 600 | 100 | 76.7 | 1.2 |
| | 700 | 100 | 97.2 | 1.5 |
| Example 14 | 400 | 99.9 | 19.6 | <0.1 |
| | 500 | 100 | 43.4 | <0.1 |
| | 600 | 100 | 76.5 | <0.1 |
| | 700 | 100 | 97.4 | <0.1 |
| Example 15 | 400 | 99.8 | 19.5 | <0.1 |
| | 500 | 99.9 | 43.5 | <0.1 |
| | 600 | 100 | 76.5 | <0.1 |
| | 700 | 100 | 97.6 | <0.1 |
| Example 16 | 400 | 99.8 | 19.5 | <0.1 |
| | 500 | 100 | 43.4 | <0.1 |
| | 600 | 100 | 76.4 | <0.1 |
| | 700 | 100 | 97.4 | <0.1 |
| Example 17 | 400 | 99.6 | 19.6 | <0.1 |
| | 500 | 99.9 | 43.5 | <0.1 |
| | 600 | 100 | 76.6 | <0.1 |
| | 700 | 100 | 97.5 | <0.1 |
| Example 18 | 400 | 100 | 19.5 | <0.1 |
| | 500 | 100 | 43.4 | <0.1 |
| | 600 | 100 | 76.3 | <0.1 |
| | 700 | 100 | 97.7 | <0.1 |
| Comparative Example 3 | 400 | 31.8 | 11.2 | <0.1 |
| | 500 | 42.5 | 31.4 | <0.1 |
| | 600 | 55.1 | 49.2 | 8.5 |
| | 700 | 89.4 | 81.1 | 12.1 |
| Comparative Example 4 | 400 | 36.5 | 12.5 | <0.1 |
| | 500 | 44.4 | 36.2 | <0.1 |
| | 600 | 56.4 | 48.2 | 9.2 |
| | 700 | 87.3 | 79.4 | 14.3 |

## Table 7-2

| Examples and Comparative Examples | Composition of catalyst | Si content (wt%) | Element added | |
|---|---|---|---|---|
| | | | Kind | (wt%) |
| Example 1 | Ni/(Mg+Al+Ni+Si): 0.156 mol (Ni: 20.39 wt%) | 1.952 | - | - |
| Example 14 | Ni/(Mg+Al+Ni+Si +Pd): 0.172 mol (Ni: 23.19 wt%) | 8.879 | Pd | 0.031 |
| Example 15 | Ni/(Mg+Al+Ni+Si +Mn): 0.083 mol (Ni: 11.02 wt%) | 3.516 | Mn | 5.032 |
| Example 16 | Ni/(Mg+Al+Ni+Si +Pt): 0.156 mol (Ni: 20.25 wt%) | 1.938 | Pt | 3.621 |
| Example 17 | Ni/(Mg+Al+Ni+Si +Rh+Cu): 0.154 mol (Ni: 19.77 wt%) | 1.892 | Rh / Cu | 9.821 / 5.824 |
| Example 18 | Ni/(Mg+Al+Ni+Si +Ag+V): 0.155 mol (Ni: 20.01 wt%) | 1.92 | Ag / V | 8.235 / 0.121 |
| Comparative Example 3 | Ni/(Al+Ni): 0.091 mol (Ni: 10.2 wt%) | 0 | - | - |
| Comparative Example 4 | Ru/(Al+Ru): 0.046 mol (Ni: 9.015 wt%) | 0 | - | - |

Table 7-2 (continued)

| Examples and Comparative Examples | Reaction temperature (°C) | City gas 13A containing 10% nitrogen Conversion (%) | | Amount of ammonia by-produced (ppm) |
|---|---|---|---|---|
| | | 13A | $C_n$ | |
| Example 1 | 400 | 99.7 | 19.4 | <0.1 |
| | 500 | 100 | 44.1 | <0.1 |
| | 600 | 100 | 76.5 | 0.9 |
| | 700 | 100 | 96.8 | 1.2 |
| Example 14 | 400 | 99.9 | 19.3 | <0.1 |
| | 500 | 100 | 43.9 | <0.1 |
| | 600 | 100 | 76.4 | <0.1 |
| | 700 | 100 | 97.2 | 0.2 |
| Example 15 | 400 | 100 | 19.3 | <0.1 |
| | 500 | 100 | 43.8 | <0.1 |
| | 600 | 100 | 76.5 | <0.1 |
| | 700 | 100 | 97.4 | 0.3 |
| Example 16 | 400 | 99.7 | 19.2 | <0.1 |
| | 500 | 99.9 | 43.5 | <0.1 |
| | 600 | 100 | 76.6 | 0.2 |
| | 700 | 100 | 97.5 | 0.3 |
| Example 17 | 400 | 99.8 | 19.4 | <0.1 |
| | 500 | 99.9 | 43.8 | <0.1 |
| | 600 | 100 | 76.6 | <0.1 |
| | 700 | 100 | 97.6 | <0.1 |
| Example 18 | 400 | 99.8 | 19.5 | <0.1 |
| | 500 | 100 | 43.8 | <0.1 |
| | 600 | 100 | 76.7 | <0.1 |
| | 700 | 100 | 97.8 | 0.2 |
| Comparative Example 3 | 400 | 33.5 | 12.2 | <0.1 |
| | 500 | 43.4 | 33.5 | <0.1 |
| | 600 | 59.6 | 51.1 | 31.3 |
| | 700 | 90.3 | 83.4 | 44.1 |
| Comparative Example 4 | 400 | 37.4 | 11.4 | <0.1 |
| | 500 | 41.6 | 34.7 | <0.1 |
| | 600 | 54.3 | 46.8 | 42.5 |
| | 700 | 88.6 | 80.3 | 55.6 |

**Claims**

1. A hydrocarbon-decomposing catalyst comprising magnesium, aluminum and nickel as constitutional elements, and silicon contained therein, wherein a content of the said nickel is 0.1 to 40% by weight, calculated as metallic nickel, based on the weight of the catalyst, and a content of said silicon is 0.001 to 20% by weight, calculated as Si, based on the weight of the catalyst and the nickel is present as fine metallic nickel particles having an average particle diameter of 1 to 20 nm.

**2.** A hydrocarbon-decomposing catalyst according to claim 1 comprising a porous carrier and a catalytically active metal carried on the carrier, wherein said porous carrier comprises magnesium and aluminum as constitutional elements and also contains silicon in an amount of 0.001 to 20% by weight, calculated as Si, based on the weight of the catalyst, and said catalytically active metal comprises fine metallic nickel particles having an average particle diameter of 1 to 20 nm in an amount of 0.1 to 40% by weight, calculated as metallic nickel, based on the weight of the catalyst.

**3.** A hydrocarbon-decomposing catalyst according to claim 1 or 2, wherein a molar ratio of the metallic nickel to whole metal ions contained in the catalyst is 0.0007 to 0.342.

**4.** A hydrocarbon-decomposing catalyst according to any one of the preceding claims, wherein said catalyst has a chlorine content of not more than 500 ppm, a nitrogen content of not more than 500 ppm, and a sulfur content of not more than 600 ppm.

**5.** A hydrocarbon-decomposing catalyst according to any one of the preceding claims, wherein said catalyst further contains fine particles carried thereon which comprise at least one element selected from the group consisting of gold, silver, platinum, palladium, rhodium, iridium, rhenium, ruthenium, copper, iron, cobalt, manganese, chromium, vanadium and titanium.

**6.** A hydrocarbon-decomposing catalyst according to claim 5, wherein said fine particles comprising at least one element selected from the group consisting of gold, silver, platinum, palladium, rhodium, iridium, rhenium, ruthenium, copper, iron, cobalt, manganese, chromium, vanadium and titanium, have an average particle diameter of 0.5 to 50 nm, and a content of said at least one element selected from the group consisting of gold, silver, platinum, palladium, rhodium, iridium, rhenium, ruthenium, copper, iron, cobalt, manganese, chromium, vanadium and titanium is 0.025 to 10% by weight, calculated as each metal element, based on the weight of the metallic nickel contained in the catalyst.

**7.** A method for decomposing hydrocarbons by adding steam to a hydrocarbon-containing gas, comprising:

contacting the hydrocarbon-containing gas and the steam with the hydrocarbon-decomposing catalyst as defined in any one of the preceding claims at a temperature of 250 to 850°C under such a condition in which a molar ratio of steam to carbon (S/C ratio) is 1.0 to 6.0.

**8.** A method for decomposing hydrocarbons according to claim 7 wherein steam is added to a gas containing desulfurized $C_1$ or more hydrocarbons, which method further comprises:

a low-temperature decomposition step of decomposing mainly $C_2$ or more hydrocarbons contained in the hydrocarbon containing gas to obtain a gas containing $C_1$ hydrocarbon as a main component; and
a high-temperature decomposition step of decomposing the $C_1$ hydrocarbon contained as a main component in the hydrocarbon-containing gas obtained in the low-temperature decomposition step,
wherein in the low-temperature decomposition step, the high-temperature decomposition step or both of the low-temperature decomposition step and the high-temperature decomposition step, the hydrocarbon-containing gas and the steam are contacted with the hydrocarbon-decomposing catalyst as defined in any one of claims 1 to 6.

**9.** A method for decomposing hydrocarbons according to claim 8, wherein the low-temperature decomposition step is conducted at a temperature of 250 to 650°C and a molar ratio of steam to carbon (S/C ratio) of 1.0 to 6.0, and the high-temperature decomposition step is conducted at a temperature of 300 to 850°C and a molar ratio of steam to carbon (S/C ratio) of 1.0 to 6.0.

**Patentansprüche**

**1.** Kohlenwasserstoff zersetzender Katalysator, umfassend Magnesium, Aluminium und Nickel als konstituierende Elemente und darin enthalten Silizium, wobei der Gehalt an Nickel 0,1 bis 40 Gew.%, berechnet als metallisches Nickel und bezogen auf das Gewicht des Katalysators, beträgt und der Gehalt an Silizium 0,001 bis 20 Gew.%, berechnet als Si und bezogen auf das Gewicht des Katalysators, beträgt und das Nickel als feine metallische Nickel-Teilchen vorliegt, die einen durchschnittlichen Teilchen-Durchmesser von 1 bis 20 nm aufweisen.

2. Kohlenwasserstoff zersetzender Katalysator gemäß Anspruch 1, umfassend einen porösen Träger und ein auf dem Träger verteiltes, katalytisch aktives Metall, wobei der poröse Träger Magnesium und Aluminium als konstituierende Elemente umfasst und auch Silizium enthält, und zwar in einer Menge von 0,001 bis 20 Gew.%, berechnet als Si und bezogen auf das Gewicht des Katalysators, und wobei das katalytisch aktive Metall feine metallische Nickel-Teilchen umfasst, die einen durchschnittlichen Teilchen-Durchmesser von 1 bis 20 nm aufweisen, und zwar in einer Menge von 0,1 bis 40 Gew.%, berechnet als metallisches Nickel und bezogen auf das Gewicht des Katalysators.

3. Kohlenwasserstoff zersetzender Katalysator gemäß Anspruch 1 oder 2, wobei das Molverhältnis des metallischen Nickels zur Gesamtheit der in dem Katalysator enthaltenen Ionen 0,0007 bis 0,342 beträgt.

4. Kohlenwasserstoff zersetzender Katalysator gemäß einem der voranstehenden Ansprüche, wobei der Katalysator einen Chlorgehalt von nicht mehr als 500 ppm, einen Stickstoffgehalt von nicht mehr als 500 ppm und einen Schwefelgehalt von nicht mehr als 600 ppm aufweist.

5. Kohlenwasserstoff zersetzender Katalysator gemäß einem der voranstehenden Ansprüche, wobei der Katalysator des Weiteren feine Teilchen enthält, die darauf verteilt sind und die mindestens ein Element umfassen, das ausgewählt ist aus der Gruppe bestehend aus Gold, Silber, Platin, Palladium, Rhodium, Iridium, Rhenium, Ruthenium, Kupfer, Eisen, Kobalt, Mangan, Chrom, Vanadium und Titan.

6. Kohlenwasserstoff zersetzender Katalysator gemäß Anspruch 5, wobei die feinen Teilchen, die mindestens ein Element ausgewählt aus der Gruppe, bestehend aus Gold, Silber, Platin, Palladium, Rhodium, Iridium, Rhenium, Ruthenium, Kupfer, Eisen, Kobalt, Mangan, Chrom, Vanadium und Titan, enthalten, einen durchschnittlichen Teilchen-Durchmesser von 0,5 bis 50 nm aufweisen und der Gehalt an dem mindestens einem Element ausgewählt aus der Gruppe, bestehend aus Gold, Silber, Platin, Palladium, Rhodium, Iridium, Rhenium, Ruthenium, Kupfer, Eisen, Kobalt, Mangan, Chrom, Vanadium und Titan, 0,025 bis 10 Gew.%, berechnet als jeweiliges metallisches Element und bezogen auf das in dem Katalysator enthaltene metallische Nickel, beträgt.

7. Verfahren zur Zersetzung eines Kohlenwasserstoffs durch Zuführen von Dampf zu einem Kohlenwasserstoff enthaltenden Gas, umfassend:

   das Inkontaktbringen des Kohlenwasserstoff enthaltenden Gases und des Dampfes mit dem in einem der voranstehenden Ansprüche definierten Kohlenwasserstoff zersetzenden Katalysator, und zwar bei einer Temperatur von 250 bis 850°C und unter Bedingungen, bei denen das Molverhältnis von Dampf zu Kohlenstoff (S/C-Verhältnis) 1,0 bis 6,0 beträgt.

8. Verfahren zur Zersetzung von Kohlenwasserstoffen gemäß Anspruch 7, wobei Dampf zugeführt wird zu einem Gas, das $C_1$- oder höhere Kohlenwasserstoffe enthält, wobei das Verfahren des Weiteren umfasst:

   eine Niedertemperaturzersetzungsstufe zur Zersetzung von hauptsächlich $C_2$- oder höheren Kohlenwasserstoffen, die in dem Kohlenwasserstoff enthaltenden Gas enthalten sind, um ein Gas zu erhalten, das als Hauptbestandteil $C_1$-Kohlenwasserstoff enthält; und
   eine Hochtemperaturzersetzungsstufe zur Zersetzung des $C_1$-Kohlenwasserstoffs, der als Hauptkomponente in dem Kohlenwasserstoff enthaltenden Gas enthalten ist, das in der Niedertemperaturzersetzungsstufe erhalten worden ist,
   wobei in der Niedertemperaturzersetzungsstufe, der Hochtemperaturzersetzungsstufe oder sowohl der Niedertemperaturzersetzungsstufe als auch der Hochtemperaturzersetzungsstufe das Kohlenwasserstoff enthaltende Gas und der Dampf in Kontakt gebracht werden mit dem in einem der Ansprüche 1 bis 6 definierten Kohlenwasserstoff zersetzenden Katalysator.

9. Verfahren zur Zersetzung von Kohlenwasserstoffen gemäß Anspruch 8, wobei die Niedertemperaturzersetzungsstufe durchgeführt wird bei einer Temperatur von 250 bis 650°C und einem Molverhältnis von Dampf zu Kohlenstoff (S/C-Verhältnis) von 1,0 bis 6,0 und wobei die Hochtemperaturzersetzungsstufe durchgeführt wird bei einer Temperatur von 300 bis 850°C und einem Molverhältnis von Dampf zu Kohlenstoff (S/C-Verhältnis) von 1,0 bis 6,0.

**Revendications**

1. Catalyseur de décomposition d'hydrocarbures, qui comprend du magnésium, de l'aluminium et du nickel en tant qu'éléments constitutifs, ainsi que du silicium contenu dedans, et dans lequel la proportion dudit nickel, calculée en nickel métallique, vaut de 0,1 à 40 %, en poids rapporté au poids du catalyseur, la proportion dudit silicium, calculée en silicium, vaut de 0,001 à 20 %, en poids rapporté au poids du catalyseur, et le nickel se trouve présent sous forme de fines particules de nickel métallique dont le diamètre moyen vaut de 1 à 20 nm.

2. Catalyseur de décomposition d'hydrocarbures, conforme à la revendication 1, comprenant un support poreux et un métal à activité catalytique, porté par le support, dans lequel catalyseur ledit support poreux comprend du magnésium et de l'aluminium en tant qu'éléments constitutifs, et contient aussi du silicium en une proportion, calculée en silicium, de 0,001 à 20 %, en poids rapporté au poids du catalyseur, et ledit métal à activité catalytique comprend de fines particules de nickel métallique de 1 à 20 nm de diamètre moyen, présentes en une proportion, calculée en nickel métallique, de 0,1 à 40 %, en poids rapporté au poids du catalyseur.

3. Catalyseur de décomposition d'hydrocarbures, conforme à la revendication 1 ou 2, dans lequel le rapport molaire du nickel métallique à l'ensemble des ions de métaux contenus dans le catalyseur vaut de 0,0007 à 0,342.

4. Catalyseur de décomposition d'hydrocarbures, conforme à l'une des revendications précédentes, lequel catalyseur ne contient ni plus de 500 ppm de chlore, ni plus de 500 ppm d'azote, ni plus de 600 ppm de soufre.

5. Catalyseur de décomposition d'hydrocarbures, conforme à l'une des revendications précédentes, lequel catalyseur contient en outre de fines particules portées dessus, qui comprennent au moins un élément choisi dans l'ensemble constitué par les suivants : or, argent, platine, palladium, rhodium, iridium, rhénium, ruthénium, cuivre, fer, cobalt, manganèse, chrome, vanadium et titane.

6. Catalyseur de décomposition d'hydrocarbures, conforme à la revendication 5, dans lequel lesdites fines particules comprenant au moins un élément choisi dans l'ensemble constitué par les or, argent, platine, palladium, rhodium, iridium, rhénium, ruthénium, cuivre, fer, cobalt, manganèse, chrome, vanadium et titane ont de 0,5 à 50 nm de diamètre moyen et contiennent dudit élément au nombre d'au moins un, choisi dans l'ensemble constitué par les or, argent, platine, palladium, rhodium, iridium, rhénium, ruthénium, cuivre, fer, cobalt, manganèse, chrome, vanadium et titane, en une proportion, calculée en chaque élément métallique, de 0,025 à 10 %, en poids rapporté au poids du nickel métallique contenu dans le catalyseur.

7. Procédé de décomposition d'hydrocarbures par addition de vapeur d'eau à un gaz contenant un hydrocarbure, lequel procédé comporte le fait de mettre le gaz contenant un hydrocarbure et la vapeur d'eau en contact avec un catalyseur de décomposition d'hydrocarbures, conforme à l'une des revendications précédentes, à une température de 250 à 850 °C et en opérant avec un rapport molaire de la vapeur d'eau au carbone (rapport VE/C) de 1,0 à 6,0.

8. Procédé de décomposition d'hydrocarbures, conforme à la revendication 7, dans lequel on ajoute de la vapeur d'eau à un gaz qui contient des hydrocarbures en $C_1$ ou supérieurs, désulfurés, lequel procédé comporte en outre :

   - une étape de décomposition à basse température, au cours de laquelle se décomposent principalement les hydrocarbures en $C_2$ ou supérieurs contenus dans le gaz contenant des hydrocarbures, de sorte que l'on obtient un gaz contenant de l'hydrocarbure en $C_1$ en tant que composant principal,
   - et une étape de décomposition à haute température, au cours de laquelle se décompose l'hydrocarbure en $C_1$ contenu en tant que composant principal dans le gaz contenant des hydrocarbures obtenu lors de l'étape de décomposition à basse température ;

   étant entendu que c'est dans l'étape de décomposition à basse température, dans l'étape de décomposition à haute température, ou dans les deux étapes de décomposition à basse température et de décomposition à haute température qu'on met le gaz contenant des hydrocarbures et la vapeur d'eau en contact avec un catalyseur de décomposition d'hydrocarbures, conforme à l'une des revendications 1 à 6.

9. Procédé de décomposition d'hydrocarbures conforme à la revendication 8, dans lequel l'étape de décomposition à basse température est réalisée à une température de 250 à 650 °C et avec un rapport molaire de la vapeur d'eau au carbone (rapport VE/C) de 1,0 à 6,0, et l'étape de décomposition à haute température est réalisée à une température de 300 à 850 °C et avec un rapport molaire de la vapeur d'eau au carbone (rapport VE/C) de 1,0 à 6,0.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004035204 A
- JP 2001146406 A
- JP 2000503624 A
- JP 2003135967 A
- JP 6015172 A